# EUROPEAN PATENT SPECIFICATION

(11) **EP 3 153 393 B1**
(45) Date of publication and mention of the grant of the patent: **24.10.2018**
(21) Application number: 14893825.1
(22) Date of filing: 06.06.2014
(51) Int. Cl.: B62M 6/55

(54) **ELECTRICALLY ASSISTED BICYCLE**
ELEKTRISCH UNTERSTÜTZTES FAHRRAD
VÉLO À ASSISTANCE ÉLECTRIQUE

(43) Date of publication of application: 12.04.2017
(73) Proprietor: Panasonic Intellectual Property Management Co., Ltd., Osaka-shi, Osaka 570-6207 (JP)
(72) Inventor: KAWAKAMI, Masafumi, Chuo-ku, Osaka-shi Osaka 540-6207 (JP)
(74) Representative: Grünecker Patent- und Rechtsanwälte PartG mbB
(86) International application number: PCT/JP2014/003015
(87) International publication number: WO 2015/186159

(56) References cited:
- JP-A- H 092 369
- JP-A- 2013 086 562
- JP-A- 2013 086 562

## Description

### Technical Field

The present invention relates to an electrically assisted bicycle capable of traveling with a combination of a human driving force generated by a pedal force from a pedal and an auxiliary driving force generated by a motor.

### Background Art

A known electrically assisted bicycle including a motor feeds power from a power storage such as a battery, detects a human driving force including a pedal force applied to a pedal by means of a torque sensor, and adds an auxiliary driving force (assisting force) of the motor according to the human driving force. Thus, such an electrically assisted bicycle can smoothly travel on an uphill slope and so on.

In such an electrically assisted bicycle, a motor drive unit including a motor is disposed where a crank shaft is provided. Moreover, the electrically assisted bicycle configured thus has a relatively heavy motor drive unit that is disposed at a low position at the center of the electrically assisted bicycle in the longitudinal direction (that is, an intermediate point between the front wheel and the rear wheel of the bicycle). Thus, the front and rear wheels of the electrically assisted bicycle configured thus can be more easily lifted than an electrically assisted bicycle having a motor in the hub of the front or rear wheel. Such an electrically assisted bicycle can easily pass over a step of a path, achieving ease of handling and high traveling stability.

Motor drive units to be provided in such an electrically assisted bicycle are broadly classified into a so-called double-shaft motor drive unit 100 that includes, as shown in FIG. 25, an auxiliary-driving force output sprocket 103 that outputs an auxiliary driving force from a motor in addition to a driving sprocket (also called a front sprocket or a chain sprocket) 102 serving as a human driving force output wheel disposed near one end of a crank shaft 101, and a so-called single-shaft motor drive unit 200 shown in FIGS. 26 and 27 in which a human driving force generated by a pedal force and an auxiliary driving force generated by a motor are combined in the motor drive unit 200 and the resultant force is outputted from a driving sprocket 201.

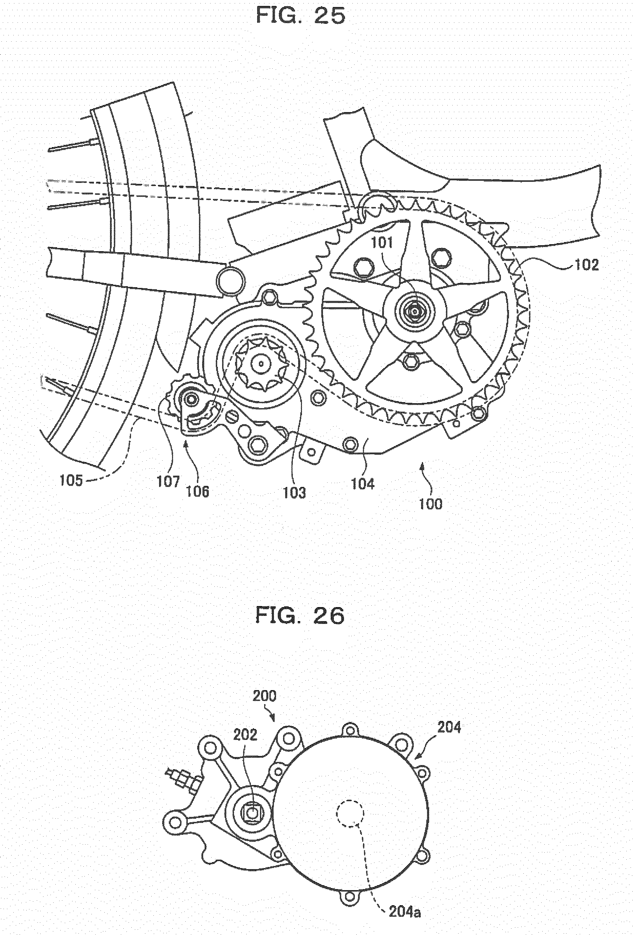

The double-shaft motor drive unit 100 is disclosed in, for example, Patent Literature 1. As shown in FIG. 25, the auxiliary-driving force output sprocket 103 protrudes to the outside of a unit case 104 of the motor drive unit 100 from a portion behind the driving sprocket 102 in the motor drive unit 100. The driving sprocket 102 that outputs a human driving force and the auxiliary-driving force output sprocket 103 that outputs an auxiliary driving force are respectively engaged with a chain 105 serving as an endless driving force transmission member. The human driving force and the auxiliary driving force are combined by the chain 105 and then are transmitted to the rear wheel.

Behind the auxiliary-driving force output sprocket 103, a tensioner device (also called a guide device) 106 is provided in engagement with the chain 105, which has been engaged with the auxiliary-driving force output sprocket 103, so as to guide the chain 105 downward. Moreover, a tension sprocket 107 provided in the tensioner device 106 increases the winding angle of the chain 105 engaged with the auxiliary-driving force output sprocket 103.

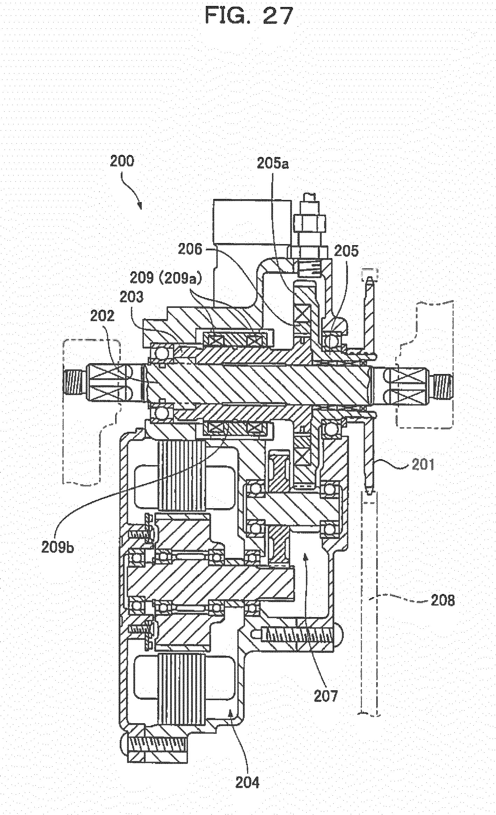

The so-called single-shaft motor drive unit 200 is disclosed in, for example, Patent Literature 2. As shown in FIGS. 26 and 27, in the single-shaft motor drive unit 200, the outer periphery of a crank shaft 202 that receives a human driving force transmitted from the pedal has a cylindrical human-power transmission member 203 that receives the human driving force transmitted by serration coupling and so on, and a resultant force member 205 where a human driving force transmitted via the human-power transmission member 203 is combined with an auxiliary driving force from a motor 204. Moreover, a human driving force from the human-power transmission member 203 is transmitted to the resultant force member 205 via a one-way clutch 206. A large-diameter gear 205a that receives an auxiliary driving force from the motor 204 via a speed reduction mechanism 207 is formed on one end of the resultant force member 205, whereas the driving sprocket 201 is attached to the other end of the resultant force member 205, the driving sprocket 201 serving as a driving force output wheel engaged with a chain 208 serving as an endless driving force transmission member. A resultant force from the resultant force member 205 is transmitted from the driving sprocket 201 to the rear wheel through the chain 208.

As shown in FIGS. 26 and 27, the single-shaft motor drive unit 200 is configured such that only the driving sprocket 201 is engaged with the chain 208 and the resultant force of a human driving force and an auxiliary driving force is transmitted to the chain 208. In contrast, the double-shaft motor drive unit 100 needs to engage, as shown in FIG. 25, the driving sprocket 102 for transmitting a human driving force, the auxiliary-driving force output sprocket 103 for transmitting an auxiliary driving force, and the tension sprocket 107 with the chain 105.

Thus, the area of the single-shaft motor drive unit 200 in side view (laterally projected area) can be advantageously smaller (compact) than that of the double-shaft motor drive unit 100 depending on the layout of the motor 204 and the speed reduction mechanism 207. Moreover, a so-called front derailleur can be attached to the single-shaft motor drive unit 200 including the driving sprocket 201 with multiple stages. In the double-shaft motor drive unit 100, it is necessary to engage the driving sprocket 102, the auxiliary-driving force output sprocket 103, and the tension sprocket 107 with the chain 105, leading to difficulty in attaching the front derailleur. Furthermore, the single-shaft motor drive unit 200 advantageously eliminates the need for providing, for example, the tensioner device 106 of the tension sprocket 107.

Typically, in the advantageous single-shaft motor drive unit 200, a magnetostriction torque sensor 209 for detecting a human driving force is provided on the outer periphery of the human-power transmission member 203, which receives a human driving force transmitted from the crank shaft 202, and a portion opposed to the outer periphery. Specifically, a magnetostriction generation portion 209b is formed on the outer periphery of the human-power transmission member 203, and a coil 209a for detecting a change of magnetism on the magnetostriction generation portion 209b is opposed to the magnetostriction generation portion 209b. When the right and left pedals are pressed, the crank shaft 202 is twisted by a pedal force (human driving force) and thus the twisted state of the human-power transmission member 203 that receives a human driving force transmitted from the crank shaft 202 is detected by the torque sensor 209.

If a front derailleur is attached to the single-shaft motor drive unit 200, an external derailleur for a sport bicycle or the like may be provided on the side of the crank shaft. Specifically, as shown in FIG. 27, a plurality of driving sprockets may be disposed in the location of the driving sprocket 201 so as to be displaced from each other along the axial direction of the crank shaft 202 (also referred to as a vehicle width direction) and a front derailleur that moves the chain in the vehicle width direction may be provided near these driving sprockets.
Further bicycles are disclosed in JP 2013 086562 A and JP H09 2369 A.

### Citation List

### Patent Literature

Patent Literature 1: Japanese Patent Publication No. 2009-208710A
Patent Literature 2: Japanese Patent Publication No. H10-250673A

Document JP H10-250673A shows the preamble of claim 1.

### Summary of Invention

### Technical Problem

However, the single-shaft motor drive unit including the external derailleur may cause the following problems:
First, the driving sprockets are laterally disposed and the chain is switched among these driving sprockets. Thus, the chain needs to have smaller dimensions (smaller thickness) in the vehicle width direction than an ordinary chain. However, in such an electrically assisted bicycle, the resultant force of a human driving force and an auxiliary driving force is applied to the chain. Thus, the chain having smaller dimensions (smaller thickness) in the vehicle width direction than an ordinary chain may have quite a short life expectancy, causing frequent replacement of components or an insufficient auxiliary driving force.

Generally, a front derailleur provided for a bicycle is disposed diagonally above and behind a driving sprocket. A battery mount and a battery are disposed in this location on an electrically assisted bicycle and thus these components (the mount and the battery) may interfere with the front derailleur. This may disadvantageously lead to difficulty in preferably arranging the components and the front derailleur.

Since the front derailleur is exposed to the outside, the front derailleur or an engaging portion between the chain and the front derailleur may come into contact with obstacles during traveling. This may cause damage or take off the chain, reducing reliability.

Furthermore, in such an electrically assisted bicycle, the resultant force of a human driving force and an auxiliary driving force is applied to the chain. The front derailleur needs to be developed as a special front derailleur capable of switching in response to a large torque.

The external derailleur provided in the single-shaft motor drive unit may be replaced with a derailleur having a planet gear mechanism. In this case, the use of the planet gear mechanism may reduce torque transmission efficiency.

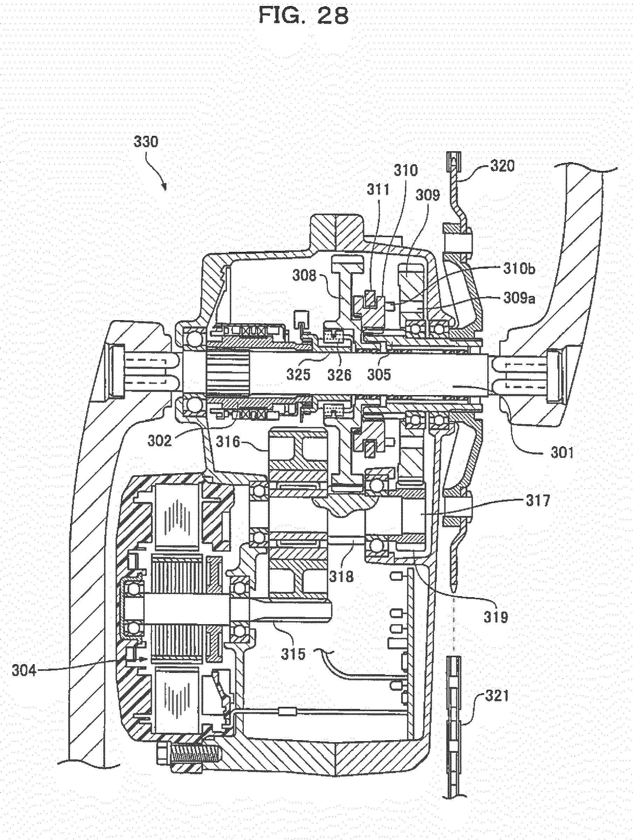

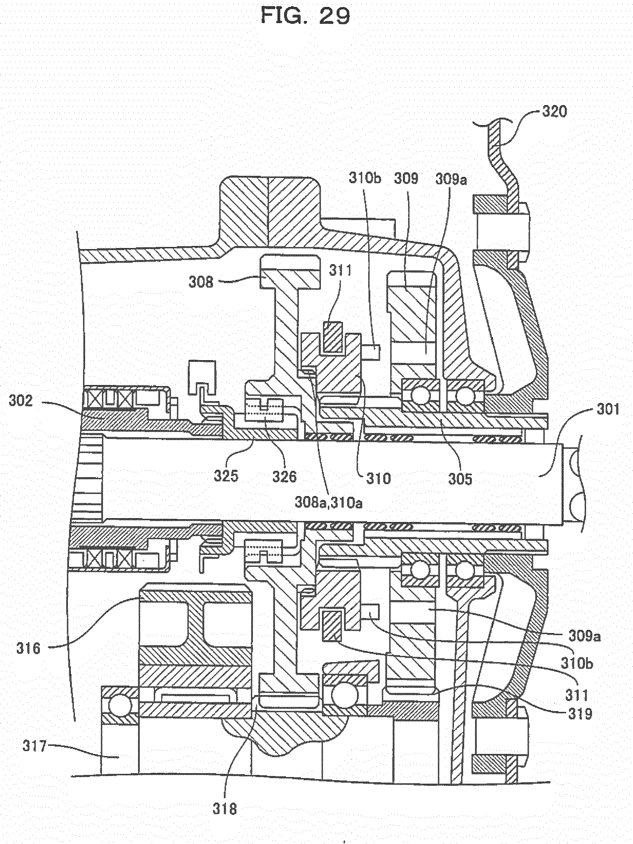

In a method of solving these problems, as shown in FIGS. 28 and 29, the outer periphery of a crank shaft 301 that receives a human driving force transmitted from a pedal may have a cylindrical human-power transmission member 302 that receives the transmitted human driving force, a resultant-force transmission member 305 that receives the transmitted resultant force of the human driving force and an auxiliary driving force from a motor 304, a low-speed reduction gear 308 and a high-speed reduction gear 309 that receive an auxiliary driving force from the motor 304 with different peripheral velocities (that is, different numbers of revolutions), and a selection clutch 310 that can be selectively engaged with the reduction gears 308 and 309.

The selection clutch 310 is movable and rotatable along the axis of the resultant-force transmission member 305 (the axis of the crank shaft 301). In this configuration, an auxiliary driving force from the motor 304 is transmitted to the low-speed reduction gear 308 and the high-speed reduction gear 309 with different peripheral velocities through a small-diameter motor-shaft reduction gear 315 that is formed on one end of the rotating shaft of the motor 304, an intermediate-shaft reduction gear 316 engaged with the motor-shaft reduction gear 315, an intermediate shaft 317, intermediate-shaft reduction gears 318 and 319, and so on.

The selection clutch 310 is movable along the axis (the axis of the crank shaft 301) of the resultant-force transmission member 305 by means of a clutch drive unit 311 that is moved through a wire or the like by a shifter (not shown) attached to, for example, a handle bar.

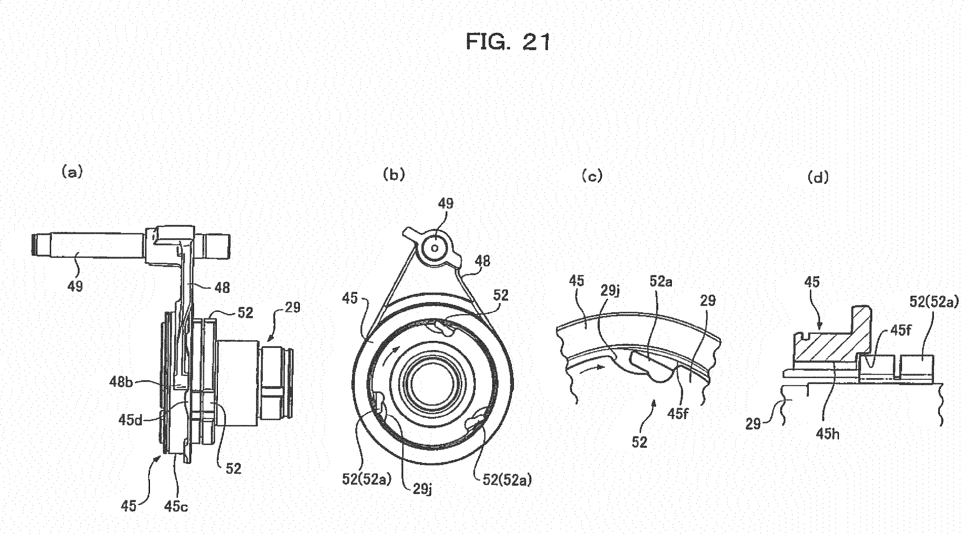

The inner periphery of the selection clutch 310 is spline-coupled to the resultant-force transmission member 305, and teeth 310a are formed on the inner periphery of one side of the selection clutch 310 so as to be engaged with teeth 308a formed on the low-speed reduction gear 308 (FIG. 21). Furthermore, on the other side of the selection clutch 310, engaging protrusions 310b are formed so as to be engaged with engaging holes 309a formed on the high-speed reduction gear 309.

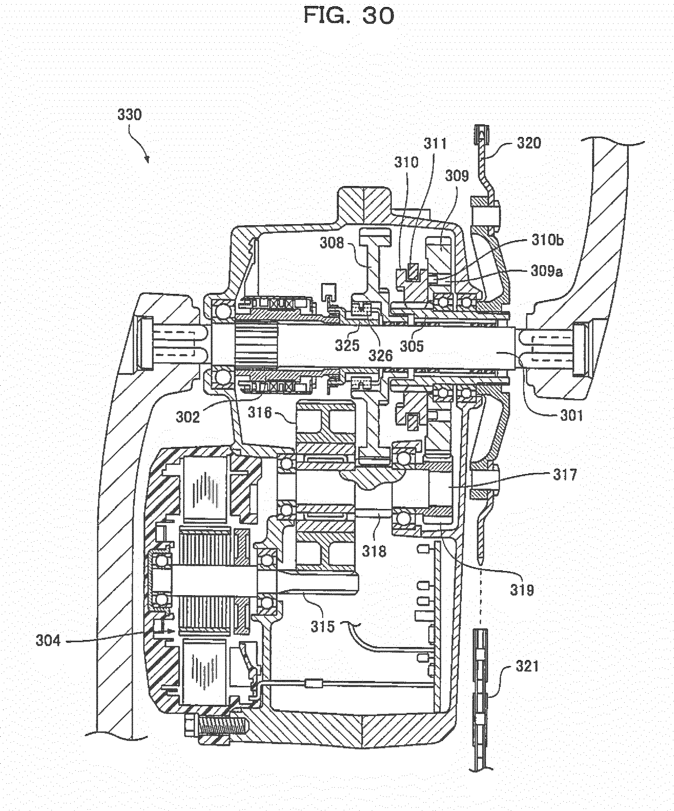

As shown in FIGS. 28 and 29, the selection clutch 310 is located so as to engage the teeth 310a of the selection clutch 310 with the teeth 308a of the low-speed reduction gear 308. This transmits an auxiliary driving force from the motor 304 to the resultant-force transmission member 305 through the low-speed reduction gear 308 that rotates with a relatively small number of revolutions (low rpm). As shown in FIG. 30, the selection clutch 310 is located so as to engage the engaging protrusions 310b of the selection clutch 310 with the engaging holes 309a of the high-speed reduction gear 309. This transmits an auxiliary driving force from the motor 304 to the resultant-force transmission member 305 with a relatively large number of revolutions (high rpm). A resultant force transmitted to the resultant-force transmission member 305 is transmitted to the rear wheel through a driving sprocket 320 and a chain 321.

In FIGS. 28 to 30, reference numeral 330 denotes a motor drive unit including the motor 304 and the gear change mechanism, reference numeral 325 denotes an interlocking cylindrical part that receives a human driving force transmitted from the human-power transmission member 302, and reference numeral 326 denotes a one-way clutch for interrupting an auxiliary driving force. When the rotation of the pedal is stopped, the one-way clutch 326 for interrupting an auxiliary driving force prevents transmission of an auxiliary driving force from the motor 304 to the pedal.

Using the configuration of FIGS. 28 to 30 can transmit a resultant force to the rear wheel during a gear change. Moreover, the speed reduction mechanism provided in the motor drive unit 330 constitutes a gear change unit (gear change mechanism) unlike in a configuration including a so-called external derailleur having a plurality of driving sprockets. This eliminates the need for a chain having smaller dimensions (smaller thickness) in the vehicle width direction unlike a single-shaft motor drive unit including an external derailleur, and also eliminates the need for a front derailleur.

In the configuration of FIGS. 28 to 30, however, the low-speed reduction gear 308 or the high-speed reduction gear 309 is selectively engaged by the selection clutch 310. Specifically, the low-speed reduction gear 308 and the high-speed reduction gear 309 have different rotation speeds and thus the selection clutch 310 needs to avoid simultaneous engagement between the low-speed reduction gear 308 and the high-speed reduction gear 309, leading to a so-called neutral state (idle state) in which the selection clutch 310 is not engaged with the low-speed reduction gear 308 or the high-speed reduction gear 309.

In such a neutral state where the selection clutch 310 is not engaged with the low-speed reduction gear 308 or the high-speed reduction gear 309, a human driving force and an auxiliary driving force are not transmitted to the rear wheel. This may cause discomfort to a rider on an electrically assisted bicycle, for example, a rapid reduction in load of pedaling. Furthermore, since a human driving force or an auxiliary driving force is not temporarily transmitted to the rear wheel, a large impact may occur during a gear change at the time of engagement with the low-speed reduction gear 308 or the high-speed reduction gear 309 through a neutral state. This may cause a shock to a rider, reduce the lives of the reduction gears 308 and 309, or make abnormal noise.

Alternatively, the selection clutch 310 may be forcibly moved into engagement with one of the resultant-force reduction gears 308 and 309 in a neutral state. In this case, a gear change after a temporary neutral state may lead to the same problem.

The present invention has been devised to solve the problems. An object of the present invention is to provide an electrically assisted bicycle that allows provision of a gear change mechanism in a so-called motor drive unit and can minimize discomfort and shock to a rider during a gear change.

### Solution to Problem

In order to solve the problems, the present invention is an electrically assisted bicycle including a motor drive unit with a motor, the electrically assisted bicycle being capable of traveling with a combination of a human driving force generated by a pedal force from a pedal and an auxiliary driving force generated by the motor, wherein the electrically assisted bicycle includes a crank shaft that receives a human driving force transmitted from the pedal and rotates about a different axis from the motor, the crank shaft has a human-power transmission member on an outer periphery of the crank shaft, the human-power transmission member receiving the transmitted human driving force, the crank shaft has a resultant-force transmission member on the outer periphery of the crank shaft, the resultant-force transmission member receiving a resultant force of a human driving force and an auxiliary driving force from the motor, the electrically assisted bicycle includes a speed reduction mechanism that has pairs of reduction gears and a selection clutch, the speed reduction mechanism combining the human driving force and the auxiliary driving force and changing the gears for the resultant force of the human driving force and the auxiliary driving force, the motor drive unit contains the human-power transmission member, the resultant-force transmission member, and the speed reduction mechanism, the resultant force transmitted to the resultant-force transmission member through the speed reduction mechanism is transmitted to a rear wheel through a driving force output wheel coaxial with the crank shaft and an endless driving force transmission member looped over the driving force output wheel, the speed reduction mechanism includes: an intermediate shaft disposed in parallel with the crank shaft; a plurality of intermediate-shaft reduction gears provided on the intermediate shaft; a low-speed reduction gear that is rotatable on the outer periphery of the crank shaft and receives a transmitted human driving force and a transmitted auxiliary driving force; a high-speed reduction gear that is rotatable on the outer periphery of the crank shaft and receives a transmitted human driving force and a transmitted auxiliary driving force; a low-speed one-way clutch disposed between the low-speed reduction gear and the resultant-force transmission member; a high-speed one-way clutch disposed between the high-speed reduction gear and the resultant-force transmission member; and the selection clutch removably engaged with the high-speed one-way clutch, and the selection clutch is engaged with the high-speed one-way clutch so as to place the high-speed one-way clutch into a free state, whereas the selection clutch is disengaged from the high-speed one-way clutch so as to activate the high-speed one-way clutch. The selection clutch may be slidable on the resultant-force transmission member. The endless driving force transmission member may be a chain or a toothed belt.

In this configuration, when the selection clutch is engaged with the high-speed one-way clutch into a free state, only the low-speed one-way clutch is activated. Thus, through the low-speed one-way clutch, an auxiliary driving force from the motor and a force from the low-speed reduction gear rotating with a speed torque are transmitted to the resultant-force transmission member and then are outputted from the resultant-force transmission member.

When the selection clutch is disengaged from the high-speed one-way clutch, the high-speed one-way clutch is activated in addition to the low-speed one-way clutch. Thus, through the high-speed one-way clutch, an auxiliary driving force from the motor and a force from the high-speed reduction gear rotating with a high speed are transmitted to the resultant-force transmission member and then are outputted from the resultant-force transmission member.

With this configuration, an auxiliary driving force from the motor is switched to the low-speed reduction gear or the high-speed reduction gear and is transmitted to the resultant-force transmission member without being placed into a so-called neutral state (idle state). This can minimize discomfort and shock to a rider during a gear change.

The low-speed one-way clutch and the high-speed one-way clutch may overlap each other perpendicularly to the axis of the crank shaft. This configuration can arrange the low-speed one-way clutch and the high-speed one-way clutch with smaller dimensions in the axial direction of the crank shaft than in a configuration where the low-speed one-way clutch and the high-speed one-way clutch are disposed at different positions perpendicularly to the axis of the crank shaft, achieving a size reduction of the motor drive unit in the axial direction of the crank shaft.

The electrically assisted bicycle may include a control unit and a position detector that detects the position of one of the selection clutch and an interlocking component that interlocks with the selection clutch. This configuration can detect whether the selection clutch or the interlocking component is located at a low-speed position or a high-speed position, thereby controlling an auxiliary driving force depending on the position. In this case, the position detector can detect whether the selection clutch or the interlocking component is located at the low-speed position, the high-speed position, or an intermediate position between the low-speed position and the high-speed position, thereby detecting switching between the low-speed position and the high-speed position. This can perform a more satisfactory controlling operation depending on the state.

In this case, when the position detector detects that the selection clutch or the interlocking component moves from the high-speed position to the low-speed position, the control unit more preferably controls the motor so as to temporarily reduce an auxiliary driving force.

With this configuration, a switching operation is performed from a high gear to a low gear by a rider or the like so as to move the selection clutch or the interlocking component from the high-speed position to the low-speed position. At this point, an auxiliary driving force temporarily decreases and thus the high-speed one-way clutch is easily switched from an engaged state to a disengaged state. Specifically, during a switching operation from the high gear to the low gear, a relatively large force is continuously applied and thus the cams (ratchet claws) of the high-speed one-way clutch may be hardly disengaged from the engagement with teeth and so on. Hence, also in this case, an auxiliary driving force is temporarily reduced so as to easily disengage the cams (ratchet claws) of the high-speed one-way clutch from the teeth and so on.

The electrically assisted bicycle preferably includes a force application mechanism that applies a force causing the selection clutch to incline the cams of the high-speed one-way clutch when the selection clutch is being moved from the high-speed position to the low-speed position. With this configuration, when the selection clutch is being moved from the high-speed position to the low-speed position by a switching operation performed by a rider and so on from the high gear to the low gear, the force application mechanism applies a force that causes the selection clutch to incline the cams of the high-speed one-way clutch, thereby facilitating switching of the high-speed one-way clutch from an engaged state to a disengaged state.

The force application mechanism preferably includes an urging device that urges the selection clutch so as to incline the cams of the high-speed one-way clutch, and an impact force generator that applies an impact force for moving the selection clutch in the axial direction of the crank shaft using an urging force of the urging device. With this configuration, when the selection clutch is being moved from the high-speed position to the low-speed position, the impact force generator applies an impact force that moves the selection clutch along the axial direction of the crank shaft, thereby facilitating switching of the high-speed one-way clutch from an engaged state to a disengaged state.

The impact force generator may be a protrusion provided on a contact surface of the selection clutch with the clutch driving arm that drives the selection clutch. This configuration facilitates switching of the high-speed one-way clutch from an engaged state to a disengaged state with a relatively simple configuration.

The force application mechanism may have an inclined surface that generates a component force for moving the selection clutch in a direction that engages the selection clutch with the high-speed one-way clutch when the selection clutch is moved from the high-speed position to the low-speed position. With this configuration, when the selection clutch is being moved from the high-speed position to the low-speed position, the inclined surface applies a component force for moving the selection clutch in the direction that engages the selection clutch with the high-speed one-way clutch, thereby facilitating switching of the high-speed one-way clutch from an engaged state to a disengaged state.

The selection clutch and the resultant-force transmission member may be fit to each other so as to rotate relative to each other around the axis of the crank shaft within a predetermined angle, one of the selection clutch and the resultant-force transmission member may have the inclined surface, and the other of the selection clutch and the resultant-force transmission member may have protrusions that come into contact with the inclined surface. This configuration also facilitates switching of the high-speed one-way clutch from an engaged state to a disengaged state with a relatively simple configuration.

The selection clutch and the resultant-force transmission member may be fit to each other so as to rotate relative to each other around the axis of the crank shaft, and the force application mechanism may have a storage recess that is formed on the inner periphery of the selection clutch and stores the raised cam of the high-speed one-way clutch, an inner inclined surface that continues from the storage recess and decreases in diameter in a circumferential movement on the inner periphery of the selection clutch so as to incline the cam, and an inclination keeping surface that is formed on the inner periphery of the selection clutch and keeps the inclination of the cam. With this configuration, when the selection clutch is being moved from the high-speed position to the low-speed position, the cam of the high-speed one-way clutch is stored in the storage recess and then a force is applied so as to incline the cam in contact with the inner inclined surface, thereby facilitating switching of the high-speed one-way clutch from an engaged state to a disengaged state.

The human-power transmission member may have a magnetostriction generation portion for a torque sensor that detects the human driving force. The electrically assisted bicycle may include a one-way clutch for interrupting an auxiliary driving force on a transmission path for a human driving force between the crank shaft and the low-speed reduction gear, the one-way clutch preventing transmission of an auxiliary driving force from the motor to the crank shaft. In this case, an interlocking cylindrical part may be provided on the outer periphery of the crank shaft so as to be engaged with the human-power transmission member and the one-way clutch for interrupting an auxiliary driving force may be disposed between the interlocking cylindrical part and the low-speed reduction gear.

With this configuration, the interlocking cylindrical part is provided between the human-power transmission member and the low-speed reduction gear. Thus, even in the case where the human-power transmission member has the magnetostriction generation portion for the torque sensor that detects the human driving force, vibrations occurring during the switching of the selection clutch and vibrations from the one-way clutch for interrupting an auxiliary driving force are hardly transmitted to the human-power transmission member. This improves the reliability of the torque sensor as compared with the absence of the interlocking cylindrical part.

The human-power transmission member may include a rotation detector that detects the rotation of one of the interlocking cylindrical part and the human-power transmission member. This configuration can detect the rotation of the interlocking cylindrical part or the human-power transmission member, that is, the rotation of the crank shaft.

### Advantageous Effects of Invention

According to the present invention, the speed reduction mechanism provided in the motor drive unit includes a low-speed reduction gear that is rotatably disposed on the outer periphery of the crank shaft and receives a transmitted human driving force and a transmitted auxiliary driving force, a high-speed reduction gear that is rotatably disposed on the outer periphery of the crank shaft and receives a transmitted human driving force and a transmitted auxiliary driving force, a low-speed one-way clutch disposed between the low-speed reduction gear and the resultant-force transmission member, a high-speed one-way clutch disposed between the high-speed reduction gear and the resultant-force transmission member, and the selection clutch removably engaged with the high-speed one-way clutch. This configuration can satisfactorily switch a resultant force from the low-speed reduction gear and a resultant force from the high-speed reduction gear, transmit the resultant force to the resultant-force transmission member, and then output the force without being placed into a so-called neutral state (idle state). This can minimize discomfort and shock to a rider during a gear change. Moreover, the speed reduction mechanism changes the gear for the resultant force of a human driving force and an auxiliary driving force from the motor, advantageously obtaining a larger force output range than in a configuration where a human driving force is combined with an auxiliary driving force after a gear change or in a configuration where an auxiliary driving force is combined with a human driving force after a gear change.

Furthermore, the low-speed one-way clutch and the high-speed one-way clutch overlap each other perpendicularly to the axis of the crank shaft. Thus, the motor drive unit can be reduced in size in the axial direction of the motor drive unit.

Moreover, a control unit and a position detector that detects the position of one of a selection clutch and an interlocking component that interlocks with the selection clutch. When the position detector detects a movement of the selection clutch from a high-speed position to a low-speed position, the control unit controls the motor so as to temporarily reduce an auxiliary driving force. This configuration facilitates switching of the high-speed one-way clutch from an engaged state to a disengaged state, thereby satisfactorily changing a gear with higher reliability.

Moreover, a force application mechanism is provided that applies a force causing the selection clutch to incline the cam of the high-speed one-way clutch when the selection clutch is being moved from the high-speed position to the low-speed position. This configuration can satisfactorily change a gear with higher reliability. In this case, the force application mechanism may be an impact force generator that applies an impact force when the selection clutch is being moved from the high-speed position to the low-speed position, or may have an inclined surface that generates a component force for moving the selection clutch in a direction that engages the selection clutch with the high-speed one-way clutch. The force application mechanism may have a storage recess that is formed on the inner periphery of the selection clutch and stores the raised cam of the high-speed one-way clutch, an inner inclined surface that continues from the storage recess and inclines so as to decrease in diameter in a circumferential movement on the inner periphery of the selection clutch, and an inclination keeping surface that keeps the inclination of the cam.

### Brief Description of Drawings

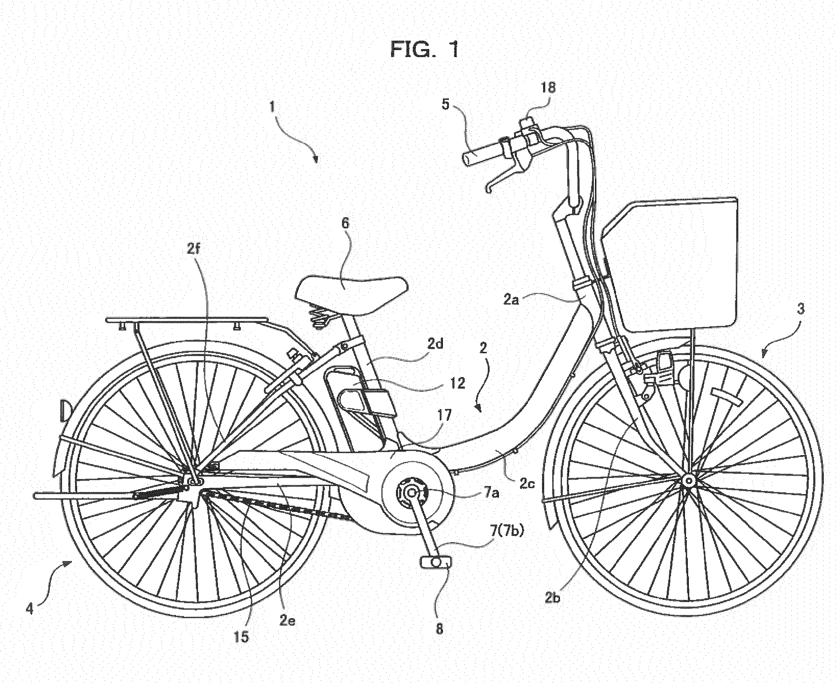

[FIG. 1] FIG. 1 is an overall side view showing an electrically assisted bicycle according to an embodiment of the present invention.

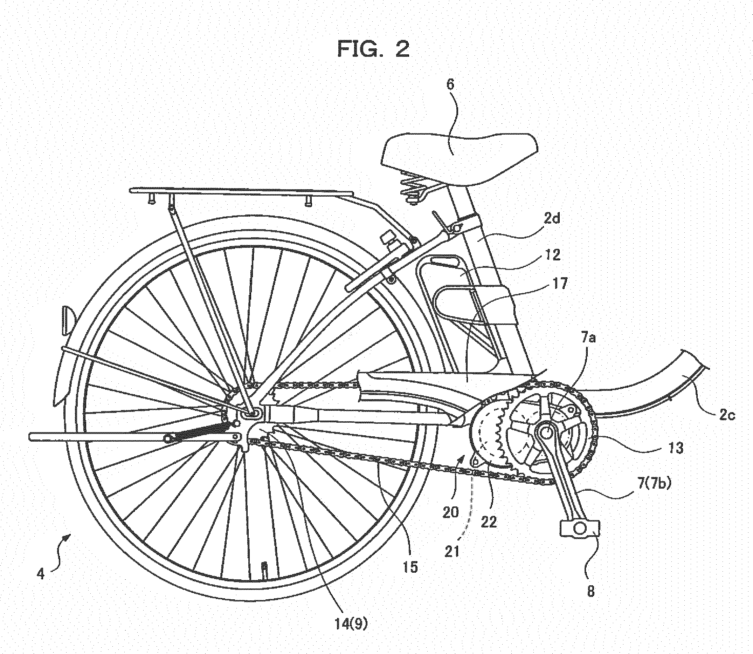

[FIG. 2] FIG. 2 is a partial cut side view of the electrically assisted bicycle.

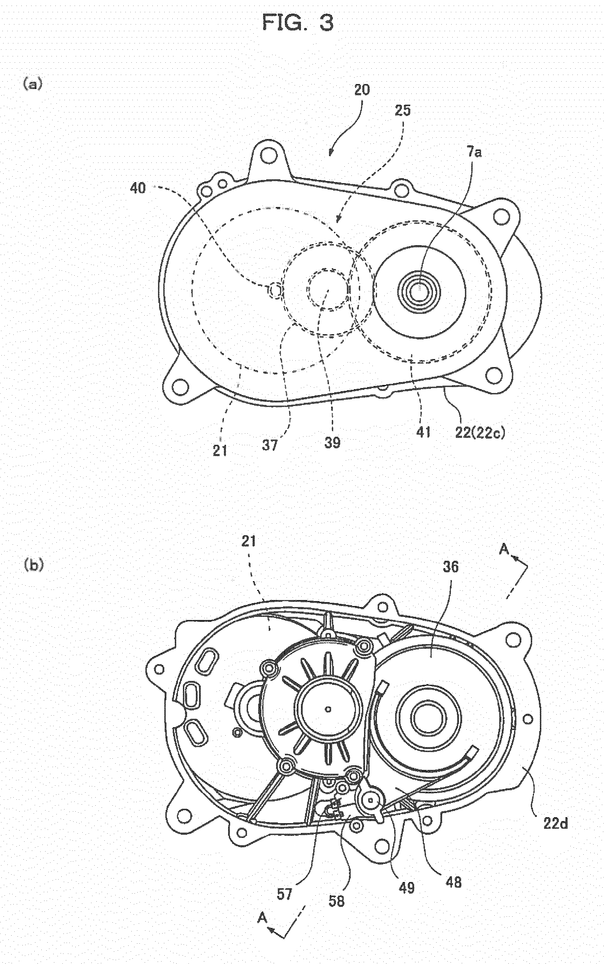

[FIG. 3] FIGS. 3(a) and 3(b) are a right side view and a right-side cross section of a motor drive unit for the electrically assisted bicycle.

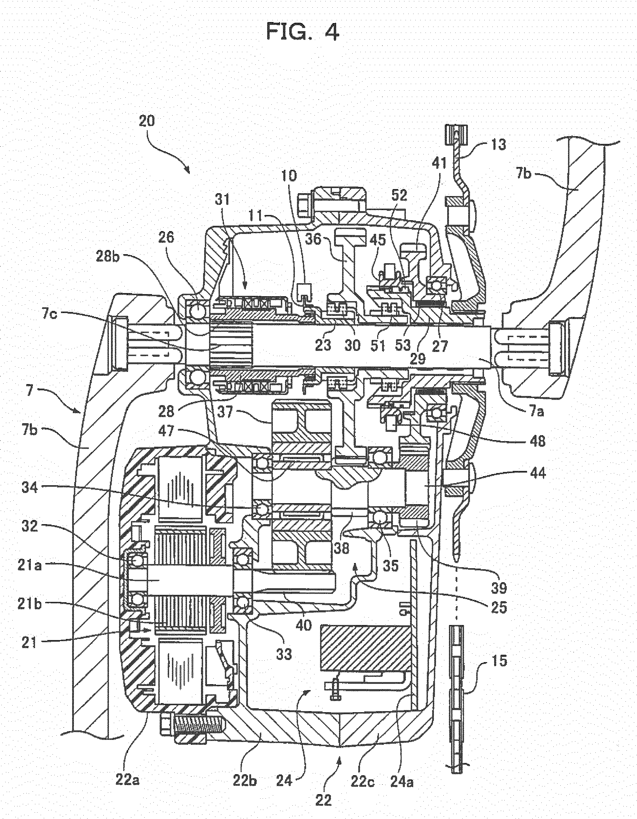

[FIG. 4] FIG. 4 is a section plan view showing the motor drive unit for the electrically assisted bicycle at a low speed (first speed).

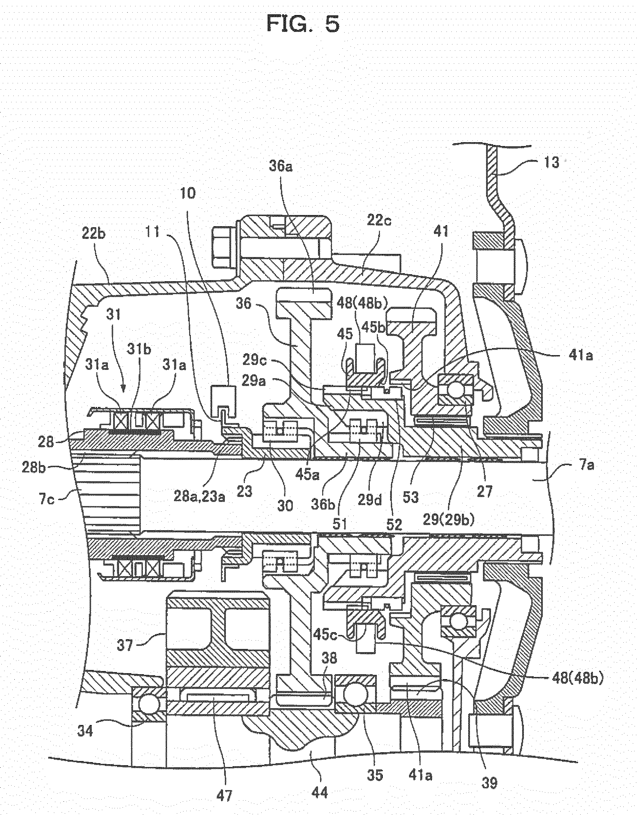

[FIG. 5] FIG. 5 is an enlarged sectional plan view showing the principal part of the motor drive unit for the electrically assisted bicycle at the low speed (first speed).

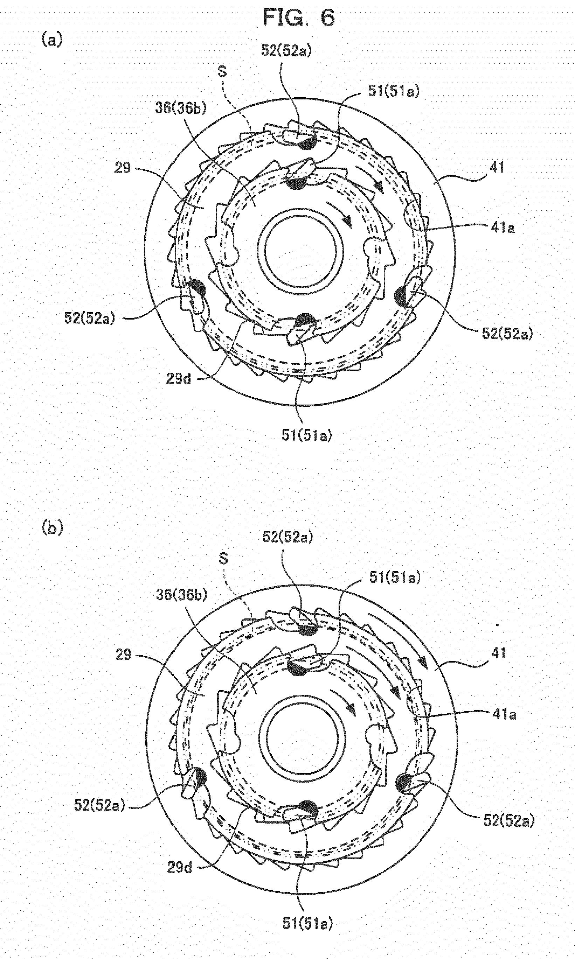

[FIG. 6] FIGS. 6(a) and 6(b) are conceptual side views showing a low-speed one-way clutch and a high-speed one-way clutch for the motor drive unit, FIG. 6(a) showing a state at the low speed (first speed), FIG. 6(b) showing a state at a high speed (second speed).

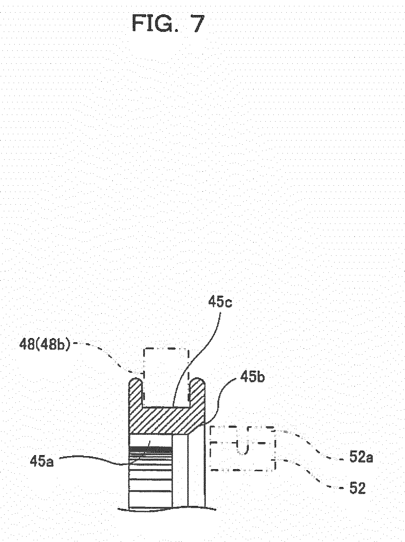

[FIG. 7] FIG. 7 is a cross-sectional view of a selection clutch for the motor drive unit.

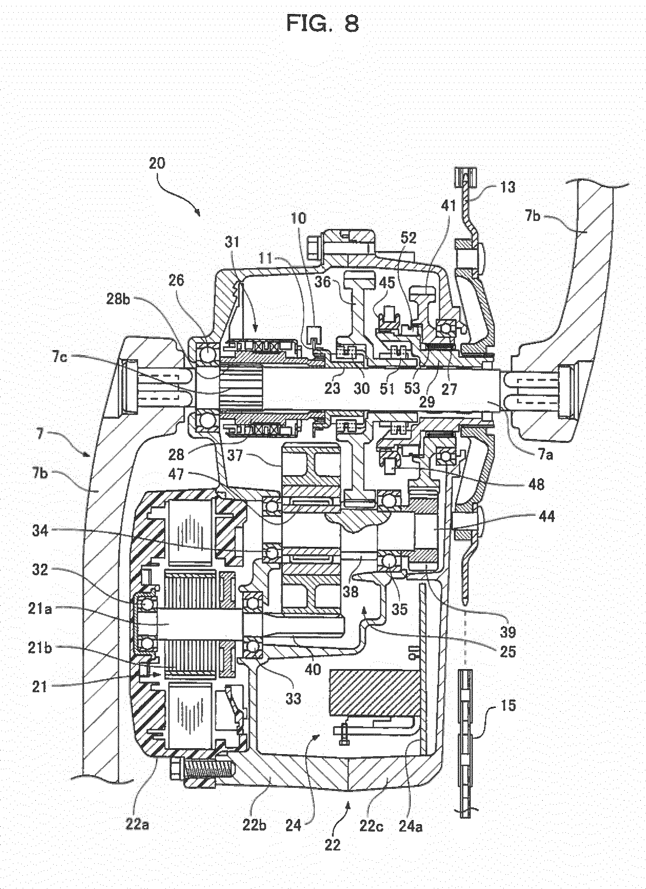

[FIG. 8] FIG. 8 is a sectional plan view of the motor drive unit at the high speed (second speed).

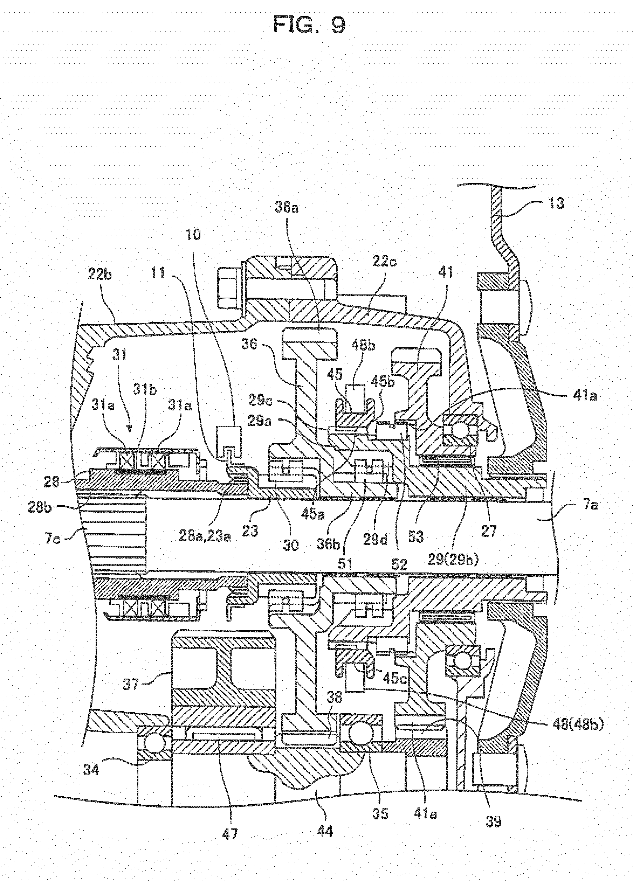

[FIG. 9] FIG. 9 is an enlarged sectional plan view showing the principal part of the motor drive unit at the high speed (second speed).

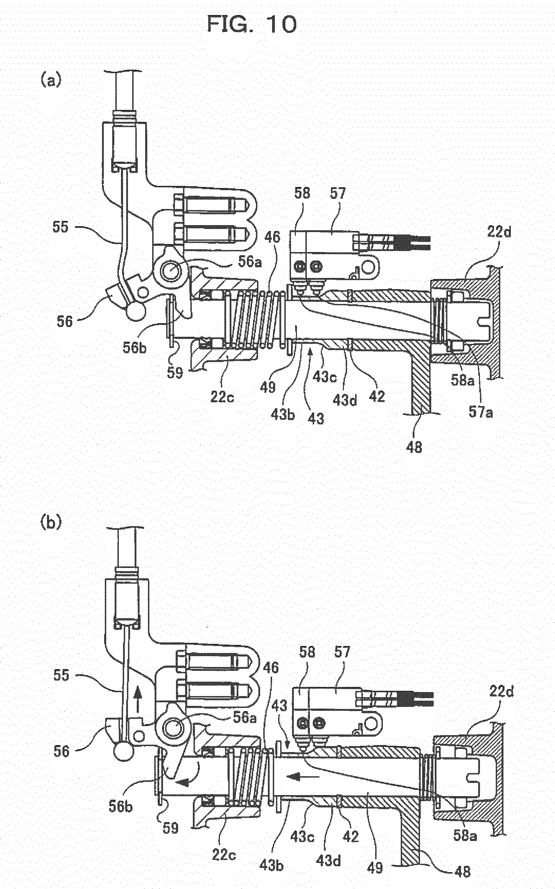

[FIG. 10] FIGS. 10(a) and 10(b) are schematic diagrams showing a clutch driving arm, a clutch drive shaft, and so on for the motor drive unit, FIG. 10(a) showing the clutch driving arm and the clutch drive shaft at a low speed (first speed) position, FIG. 10(b) showing the clutch driving arm and the clutch drive shaft at an intermediate position between the low speed (first speed) position and a high speed (second speed) position.

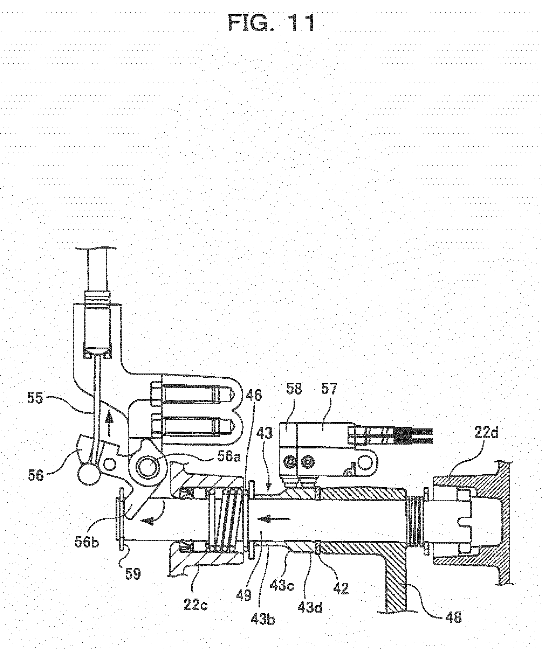

[FIG. 11] FIG. 11 is a schematic diagram showing the clutch driving arm, the clutch drive shaft, and so on for the motor drive unit at the high speed (second speed) position.

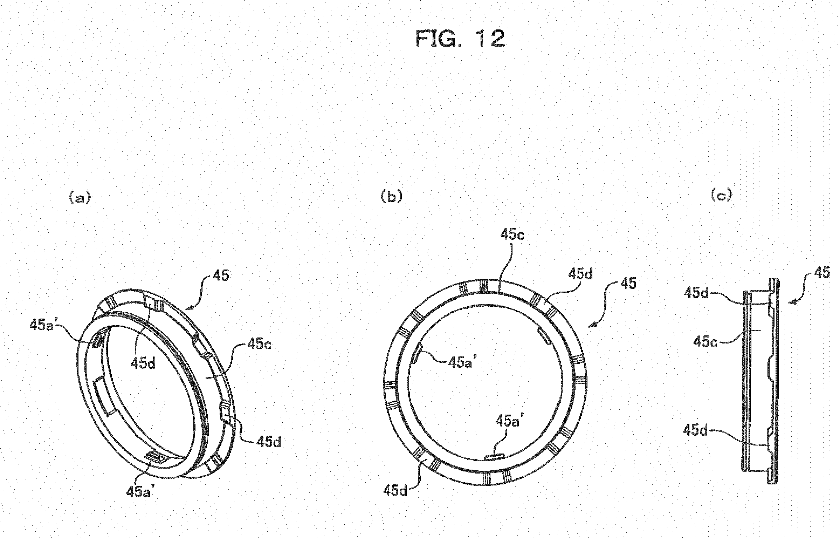

[FIG. 12] FIGS. 12(a), 12(b), and 12(c) are a perspective view, a front view, and a side view showing a selection clutch for a motor drive unit in an electrically assisted bicycle according to another embodiment of the present invention (the left side of a recess on the selection clutch is omitted).

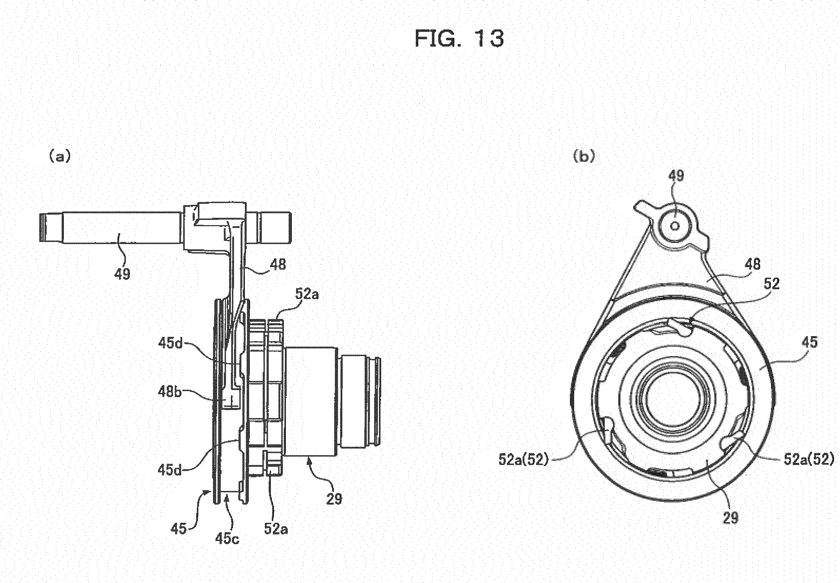

[FIG. 13] FIGS. 13(a) and 13(b) are a bottom view taken along line A-A of FIG. 3(b) and a right side view of a clutch driving arm, the selection clutch, a resultant-force transmission member, a high-speed one-way clutch, and so on for the motor drive unit at the high speed (second speed).

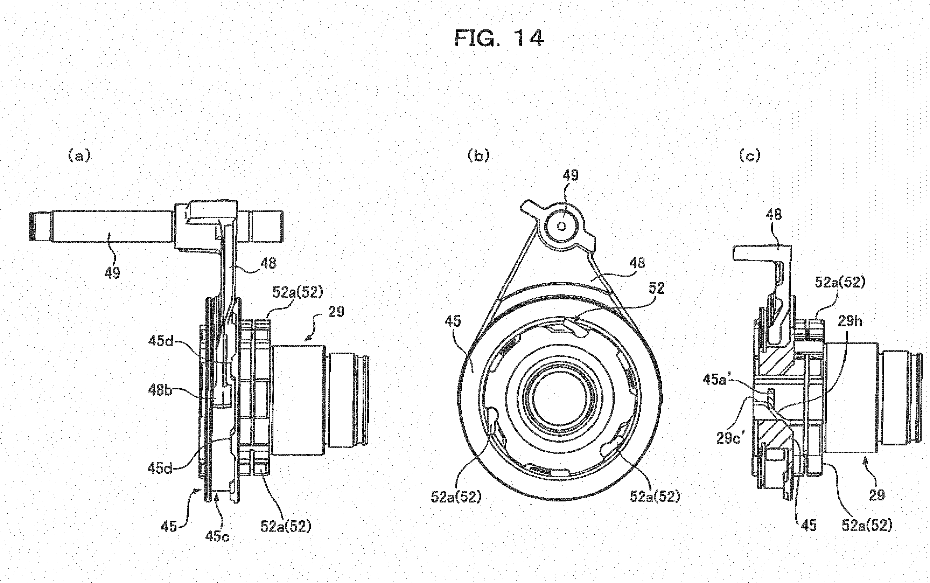

[FIG. 14] FIGS. 14(a), 14(b), and 14(c) are a bottom view taken along line A-A of FIG. 3(b), a right side view, and a partial cut rear view of the clutch driving arm, the selection clutch, the resultant-force transmission member, the high-speed one-way clutch, and so on for the motor drive unit in a standby state of a gear change from the high speed (second speed) to the low speed (first speed).

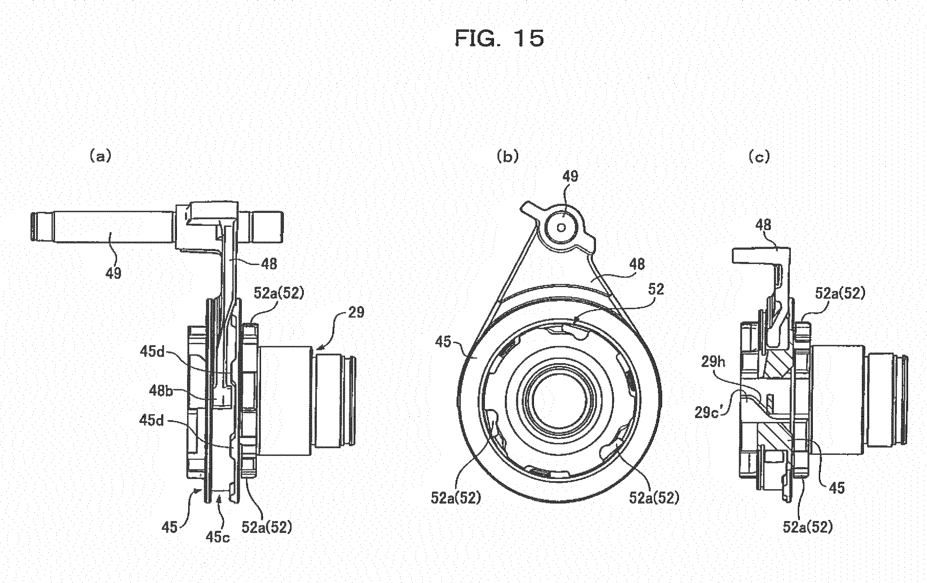

[FIG. 15] FIGS. 15(a), 15(b), and 15(c) are a bottom view taken along line A-A of FIG. 3(b), a right side view, and a partial cut rear view of the clutch driving arm, the selection clutch, the resultant-force transmission member, the high-speed one-way clutch, and so on for the motor drive unit after a gear change to the low speed (first speed).

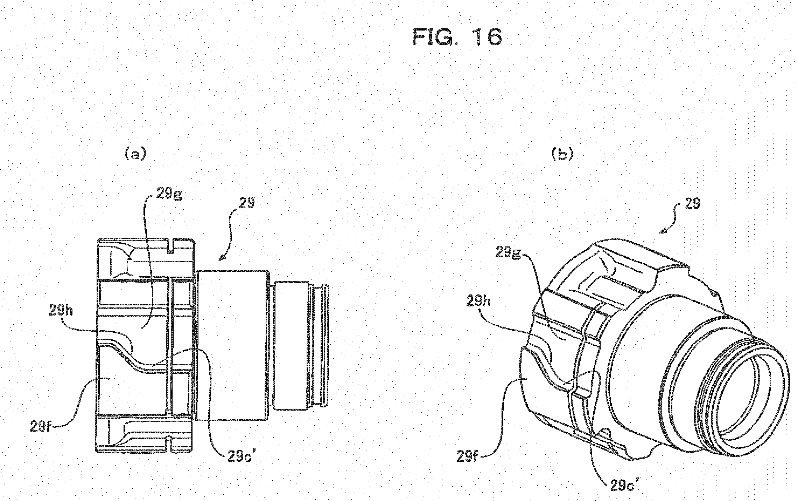

[FIG. 16] FIGS. 16(a) and 16(b) are a side view and a perspective view showing the resultant-force transmission member for the motor drive unit.

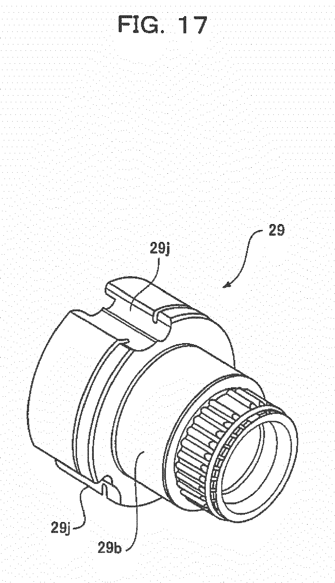

[FIG. 17] FIG. 17 is a perspective view showing a resultant-force transmission member for a motor drive unit in an electrically assisted bicycle according to still another embodiment of the present invention.

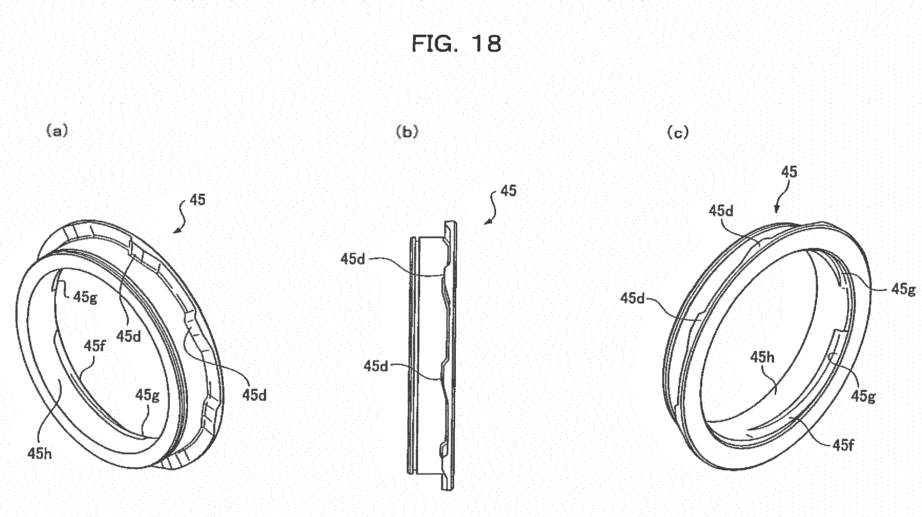

[FIG. 18] FIGS. 18(a), 18(b), and 18(c) are a perspective view, a front view, and a side view showing a selection clutch for the motor drive unit in the electrically assisted bicycle according to the still another embodiment of the present invention (the left side of a recess on the selection clutch is omitted).

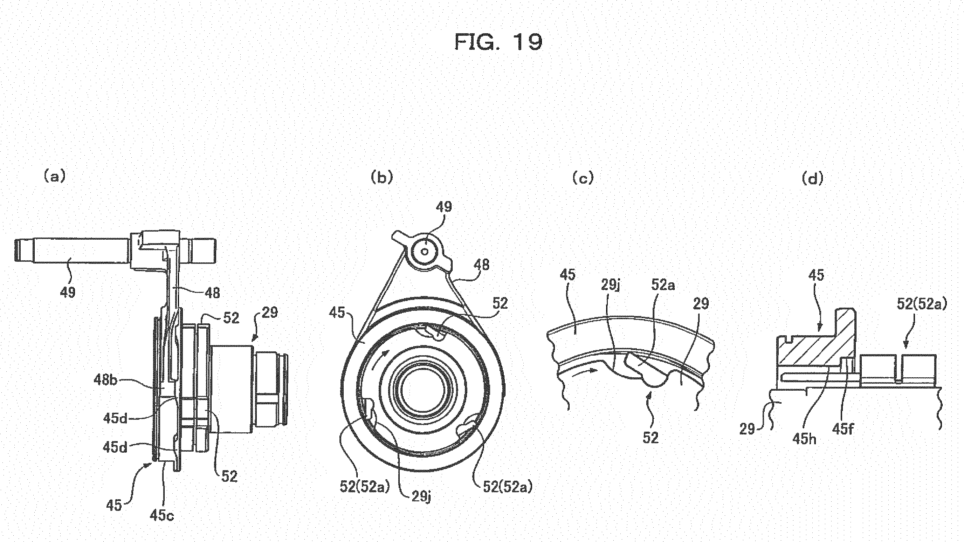

[FIG. 19] FIGS. 19(a) to 19(d) are a bottom view taken along line A-A of FIG. 3(b), a right side view, a principal-part enlarged side view, and a principal-part enlarged cross-sectional view showing a clutch driving arm, the selection clutch, a resultant-force transmission member, a high-speed one-way clutch, and so on for the motor drive unit at the high speed (second speed).

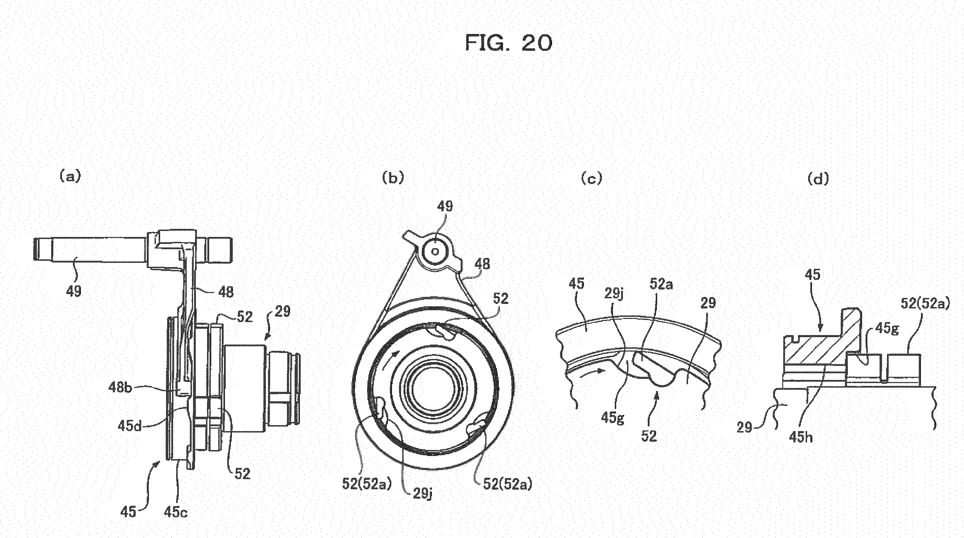

[FIG. 20] FIGS. 20(a) to 20(d) are a bottom view taken along line A-A of FIG. 3(b), a right side view, a principal-part enlarged side view, and a principal-part enlarged cross-sectional view showing the clutch driving arm, the selection clutch, the resultant-force transmission member, the high-speed one-way clutch, and so on for the motor drive unit in a standby state of a gear change from the high speed (second speed) to the low speed (first speed).
[FIG. 21] FIGS. 21(a) to 21(d) are a bottom view taken along line A-A of FIG. 3(b), a right side view, a principal-part enlarged side view, and a principal-part enlarged cross-sectional view showing the clutch driving arm, the selection clutch, the resultant-force transmission member, the high-speed one-way clutch, and so on for the motor drive unit in a standby state of a gear change from the high speed (second speed) to the low speed (first speed).

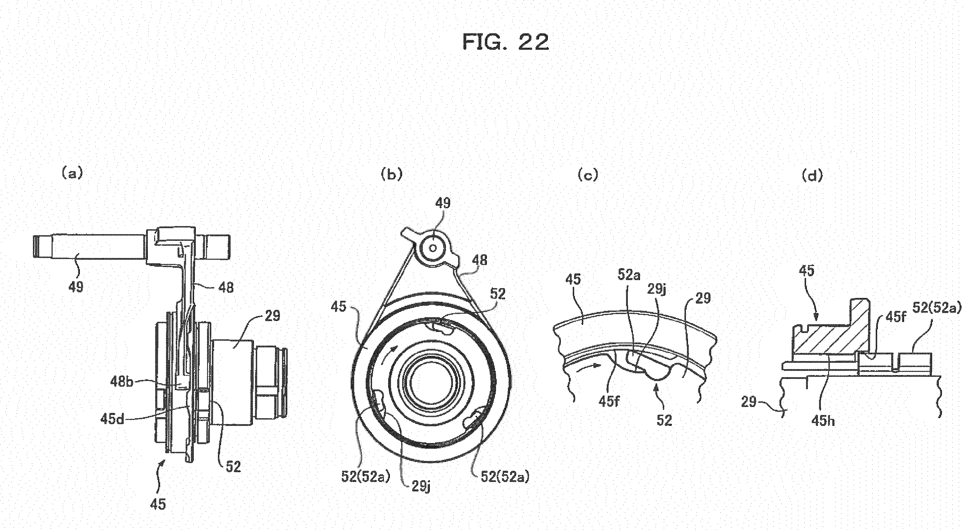

[FIG. 22] FIGS. 22(a) to 22(d) are a bottom view taken along line A-A of FIG. 3(b), a right side view, a principal-part enlarged side view, and a principal-part enlarged cross-sectional view showing the clutch driving arm, the selection clutch, the resultant-force transmission member, the high-speed one-way clutch, and so on for the motor drive unit in a standby state of a gear change from the high speed (second speed) to the low speed (first speed).

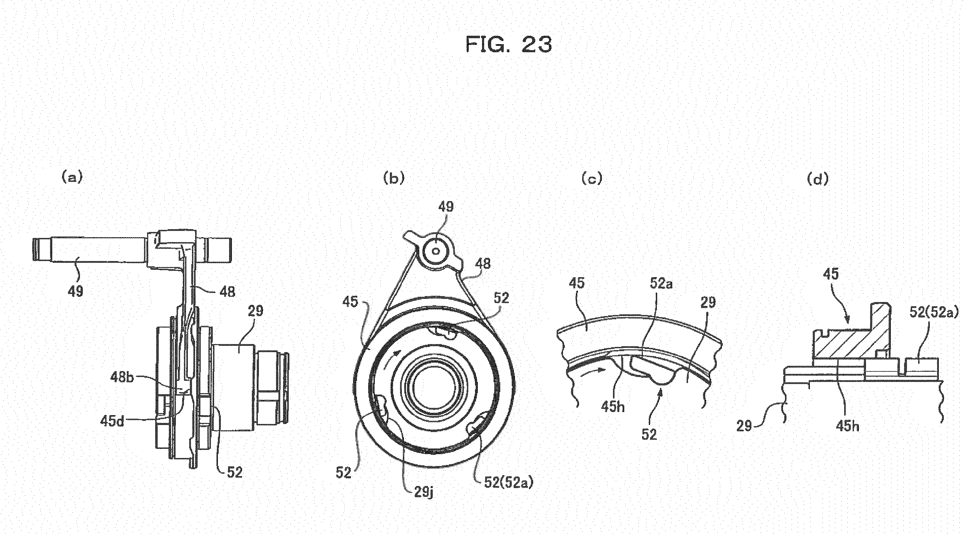

[FIG. 23] FIGS. 23(a) to 23(d) are a bottom view taken along line A-A of FIG. 3(b), a right side view, a principal-part enlarged side view, and a principal-part enlarged cross-sectional view showing the clutch driving arm, the selection clutch, the resultant-force transmission member, the high-speed one-way clutch, and so on for the motor drive unit after a gear change to the low speed (first speed).

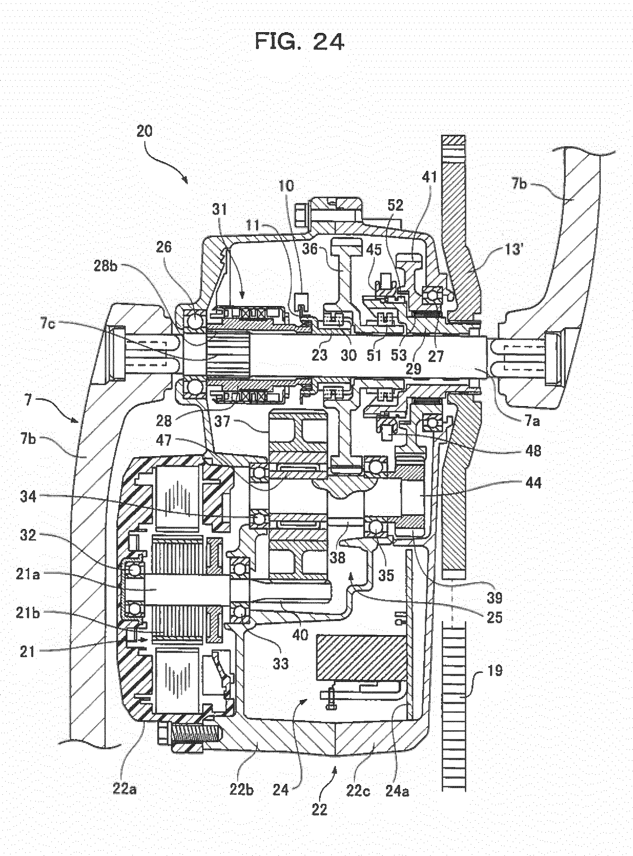

[FIG. 24] FIG. 24 is a sectional plan view showing a motor drive unit for an electrically assisted bicycle according to still another embodiment of the present invention.
[FIG. 25] FIG. 25 is a side view showing a double-shaft motor drive unit and a point near the motor drive unit in an electrically assisted bicycle of the related art.
[FIG. 26] FIG. 26 is a side view showing a single-shaft motor drive unit in an electrically assisted bicycle of the related art.
[FIG. 27] FIG. 27 is a sectional plan view of the single-shaft motor drive unit.
[FIG. 28] FIG. 28 is a sectional plan view of another single-shaft motor drive unit of the related art at a low speed (first speed).
[FIG. 29] FIG. 29 is a principal-part enlarged sectional plan view of the another single-shaft motor drive unit of the related art at the low speed (first speed).
[FIG. 30] FIG. 30 is a sectional plan view of the another single-shaft motor drive unit of the related art at a high speed (second speed).

### Description of Embodiments

An electrically assisted bicycle according to an embodiment of the present invention will be described below with reference to the accompanying drawings. In the following explanation, a lateral direction and a longitudinal direction are set relative to the traveling direction of a rider on an electrically assisted bicycle 1. The present invention is not limited to the following configuration.

In FIGS. 1 and 2, reference numeral 1 denotes the electrically assisted bicycle according to the embodiment of the present invention. As shown in FIGS. 1 and 2, the electrically assisted bicycle 1 includes: a metallic frame 2 including a head tube 2a, a front fork 2b, a main tube 2c, a seat tube 2d, a chain stay 2e, and a seat stay 2f; a front wheel 3 rotatably attached to the lower end of the front fork 2b; a rear wheel 4 rotatably attached to the rear end of the chain stay 2e; a handle bar 5 that changes the direction of the front wheel 3; a saddle 6; a crank 7 and pedals 8 that receive a human driving force including a pedal force; a motor drive unit 20 including an electric motor 21 (For example, see FIG. 4) serving as a driving source for generating an auxiliary driving force (assisting force) and a control unit 24 (FIG. 4) for various kinds of electrical control on the motor 21 and so on; a battery 12 including a secondary battery for supplying driving power to the motor 21; a manual gear change part 18 for setting the speed (a low speed (first speed) or a high speed (second speed)) of the gear changing function of a speed reduction mechanism 25, which will be discussed later, the manual gear change part 18 being attached to, for example, the handle bar 5 so as to be operated by a rider and so on; a manual operation part (not shown) for switching the power supply of the electrically assisted bicycle 1 and setting a traveling mode, the manual operation part being attached to, for example, the handle bar so as to be operated by a rider and so on; a driving sprocket (may be called a front sprocket, a crank sprocket, or a front gear) 13 that is attached so as to coaxially rotate with a crank shaft 7a and serves as a driving force output wheel for outputting the resultant force of a human driving force and an auxiliary driving force; a rear sprocket (may be called a rear gear) 14 serving as a rear wheel attached to a hub (also called a rear hub) 9 of the rear wheel 4; a chain 15 serving as an endless driving force transmission member rotatably wound around the driving sprocket 13 and the rear sprocket 14 in an endless manner; and a chain cover 17 that laterally covers the chain 15 and so on.

The battery 12 is an example of a power storage and preferably serves as a secondary battery. Another example of a power storage may be a capacitor. The crank 7 includes crank arms 7b provided on the right and left of the crank 7 and the crank shaft 7a connecting the right and left crank arms 7b. The pedal 8 is rotatably attached to the end of the crank arm 7b.

As shown in FIGS. 1 and 2, also in the electrically assisted bicycle 1, the motor drive unit 20 is disposed at an intermediate position between the front wheel 3 and the rear wheel 4, for example, substantially behind the crank shaft 7a (specifically, under the intermediate position). This configuration locates the relatively heavy motor drive unit 20 at the center of the electrically assisted bicycle 1 in the longitudinal direction. Thus, the front wheel 3 and the rear wheel 4 are easily lifted and the electrically assisted bicycle 1 can easily pass over a step of a path, achieving ease of handling of the body (e.g., the frame 2) of the electrically assisted bicycle 1 and high traveling stability.

FIGS. 3(a) and 3(b) are a right side view and a right-side cross section of the motor drive unit 20. FIG. 4 is a plane section view showing the motor drive unit 20.

As shown in FIGS. 3(a), 3(b), and 4, the motor drive unit 20 includes a unit case 22 constituting a casing and so on. The unit case 22 includes a motor case 22a, a left-side case 22b, and a right-side case 22c. The crank shaft 7a laterally penetrates the front of the motor drive unit 20. Moreover, the outer periphery of the crank shaft 7a has a substantially cylindrical human-power transmission member 28 that receives a human driving force transmitted from the crank shaft 7a, an interlocking cylindrical part 23 that receives a human driving force transmitted from the human-power transmission member 28, and a resultant-force transmission member 29 that receives a human driving force from the interlocking cylindrical part 23 via, for example, a one-way clutch (a one-way clutch for interrupting an auxiliary driving force) 30 and transmits the resultant force of the human driving force and an auxiliary driving force from the motor 21 to the driving sprocket 13.

Furthermore, the speed reduction mechanism 25 having pairs of reduction gears 36 to 41 is longitudinally disposed from the right side of the front of the unit case 22 to the center of the unit case 22. In the present embodiment, as will be discussed later, the function of an internal derailleur (internal gear change unit) is also provided in the speed reduction mechanism 25. Moreover, the motor 21 is disposed on the left side of the rear of the unit case 22 while the control unit 24 is disposed on the right side of the rear of the unit case 22, the control unit 24 including a control circuit board 24a having electronic components for various kinds of electrical control and a storage containing various kinds of information.

The motor drive unit 20 will be more specifically described below. As shown in, for example, FIGS. 4, 5, and 6, the crank shaft 7a laterally penetrating the front of the motor drive unit 20 is disposed so as to rotate by bearings 26 and 27. The cylindrical human-power transmission member 28 is fit onto the outer periphery of the left side of the crank shaft 7a via a serration part (or a spline part) 7c so as to rotate as an integral part. Moreover, a serration part (or a spline part) 28b is formed at a point corresponding to the serration part (or a spline part) 7c of the crank shaft 7a inside the human-power transmission member 28, and the serration part 28b is engaged with the serration part (or a spline part) 7c of the crank shaft 7a.

A magnetostriction generation portion 31b having magnetic anisotropy is formed on the outer surface of the human-power transmission member 28. Coils 31a are disposed with a certain clearance (space) on the outer periphery of the human-power transmission member 28. The magnetostriction generation portion 31b and the coils 31a constitute a magnetostriction torque sensor (human power detection part) 31. With this configuration, a human driving force from the crank shaft 7a is transmitted to the human-power transmission member 28 and is detected by the torque sensor 31. In the magnetostriction torque sensor 31, the magnetostriction generation portion 31b is spirally formed with an angle of, for example, +45° to - 45° with respect to the axial direction of the human-power transmission member 28. When a human driving force is transmitted to the human-power transmission member 28, the magnetostriction generation portion 31b on the surface of the human-power transmission member 28 is distorted so as to vary in magnetic permeability. Thus, a difference in the inductance of the coil 31a is measured so as to detect the magnitude of the torque (human driving force).

The interlocking cylindrical part 23 is disposed next to the right side of the human-power transmission member 28 on the outer periphery of the crank shaft 7a so as to rotate relative to the crank shaft 7a. The interlocking cylindrical part 23 rotates integrally with the human-power transmission member 28 while being engaged at a serration part (or a spline part) 28a formed on the outer periphery of the right end of the human-power transmission member 28 and a serration part (or a spline part) 23a formed on the inner periphery of the left end of the interlocking cylindrical part 23. In the present embodiment, the serration part (or a spline part) 23a formed on the inner periphery of the left end of the interlocking cylindrical part 23 is fit onto the serration part (or a spline part) 28a of the human-power transmission member 28.

Furthermore, in the present embodiment, a rotation detecting member 11 for detecting a rotational state of the interlocking cylindrical part 23 is attached to the outer periphery of the left side of the interlocking cylindrical part 23. Moreover, a rotation detector 10 is firmly attached to the unit case 22 so as to laterally hold the rotation detecting member 11 with a small clearance. For example, the rotation detector 10 includes a pair of optical sensors disposed along the rotation direction of the rotation detecting member 11, the optical sensor including a light emitting part and a light receiving part. The rotation detecting member 11 has a large number of teeth (light-shielding portions) extending outward like comb teeth. The teeth of the rotation detecting member 11 pass between the light emitting part and the light receiving part of the rotation detector 10, allowing the rotation detector 10 to electrically detect a light incidence state and a light shielding state. Subsequently, the amount and direction of rotation of the interlocking cylindrical part 23 are detected in the control unit 24 that receives the signal of the rotation detector 10. The optical sensor may be replaced with a magnetometric sensor to detect the amount and direction of rotation of the interlocking cylindrical part 23. In this case, the interlocking cylindrical part 23 rotates integrally with the human-power transmission member 28 while the human-power transmission member 28 rotates integrally with the crank shaft 7a. Thus, the detection of the amount and direction of rotation of the interlocking cylindrical part 23 allows detection of the amounts and directions of rotations of the crank shaft 7a and the pedal 8.

The low-speed reduction gear (one of the reduction gears) 36 provided in the speed reduction mechanism 25 is disposed on the outer periphery of the right side of the interlocking cylindrical part 23 via the one-way clutch (one-way clutch for interrupting an auxiliary driving force) 30. During riding forward with the pedals 8, a human driving force transmitted to the interlocking cylindrical part 23 is transmitted to the low-speed reduction gear 36 of the speed reduction mechanism 25.

As shown in FIG. 4, the motor 21 includes a rotating shaft 21a and a rotor portion 21b that are rotatably supported by motor bearings 32 and 33. The rotating shaft 21a of the motor 21 protrudes to the right so as to form a motor-shaft reduction gear 40, which will be discussed later, on the outer periphery of the protruding portion.

As shown in FIGS. 4 and 5, the speed reduction mechanism 25 includes: an intermediate shaft 44 disposed in parallel with the crank shaft 7a; the pairs of reduction gears 36 to 41 (three pairs in the present embodiment) including the low-speed reduction gear 36 and the high-speed reduction gear 41, which will be discussed later; a low-speed one-way clutch 51; a high-speed one-way clutch 52; and a selection clutch 45 that can be removably engaged with the high-speed one-way clutch 52. Moreover, the speed reduction mechanism 25 combines a human driving force transmitted through the crank shaft 7a and an auxiliary driving force transmitted from the motor 21, and then transmits the resultant force of the human driving force and the auxiliary driving force to the resultant-force transmission member 29 with a variable speed.

The intermediate shaft 44 is laterally extended at the center of the motor drive unit 20 in the longitudinal direction and is rotatably supported by the bearings 34 and 35 in parallel with the crank shaft 7a. The intermediate shaft 44 has a one-way clutch 47 for interrupting a human driving force, the large-diameter first intermediate-shaft reduction gear 37, the small-diameter second intermediate-shaft reduction gear 38, and the small-diameter third intermediate-shaft reduction gear 39 that is larger in diameter than the second intermediate-shaft reduction gear 38. If the one-way clutch 47 for interrupting a human driving force is not disengaged, the first to third intermediate-shaft reduction gears 37 to 39 rotate integrally with the intermediate shaft 44.

The small-diameter motor-shaft reduction gear 40 is formed on the rotating shaft 21a of the motor 21 and is engaged with the large-diameter first intermediate-shaft reduction gear 37. This configuration reduces the speed of rotation of the motor 21, increases the torque of an auxiliary driving force from the motor 21, and transmits the torque to the intermediate shaft 44. The small-diameter second intermediate-shaft reduction gear 38 is engaged with the large-diameter low-speed reduction gear 36 rotatably disposed on the outer periphery of the crank shaft 7a. Thus, the torque of the auxiliary driving force transmitted to the intermediate shaft 44 is further increased and then is transmitted to the low-speed reduction gear 36. The small-diameter third intermediate-shaft reduction gear 39 is engaged with the large-diameter high-speed reduction gear 41 (having a smaller diameter than the low-speed reduction gear 36) rotatably disposed on the outer periphery of the crank shaft 7a. Thus, the torque of the auxiliary driving force transmitted to the intermediate shaft 44 is further increased and then is transmitted to the high-speed reduction gear 41. The high-speed reduction gear 41 is rotated faster than the low-speed reduction gear 36. The one-way clutch 47 for interrupting a human driving force is disposed between the intermediate shaft 44 and the first intermediate-shaft reduction gear 37, operates so as not to transmit a human driving force from the human-power transmitting reduction gear 36 to the motor 21, and prevents a force from the pedal 8 from rotating the motor 21 in the absence of an auxiliary driving force, allowing a rider to rotate the pedals 8 with a smaller force.

For example, as shown in FIG. 5, the low-speed reduction gear 36 has a small-diameter cylindrical part 36b that extends to the right from the proximal portions of the teeth 36a and is rotatably disposed on the outer periphery of the crank shaft 7a. The low-speed one-way clutch 51 is assembled to the outer periphery of the cylindrical part 36b of the low-speed reduction gear 36 and includes cams (ratchet claws) 51a that are removably engaged with teeth 29d (For example, in FIGS. 5 and 6) formed on the inner periphery of a medium-diameter cylindrical part 29a formed on the resultant-force transmission member 29. The resultant-force transmission member 29 is rotatably disposed on the outer periphery of the crank shaft 7a and includes the medium-diameter cylindrical part 29a on the left side and a small-diameter cylindrical part 29b on the right side. Moreover, the driving sprocket 13 is attached to the outer periphery of the end of the small-diameter cylindrical part 29b of the resultant-force transmission member 29 and is rotated integrally with the resultant-force transmission member 29.

For example, as shown in FIGS. 5 and 6, the high-speed reduction gear 41 is rotatably disposed on the outer periphery of the left side of the small-diameter cylindrical part 29b of the resultant-force transmission member 29 with the bearing 53 interposed between the high-speed reduction gear 41 and the small-diameter cylindrical part 29b. Teeth 41a are formed on the inner periphery of the left side of the high-speed reduction gear 41 so as to be removably engaged with the high-speed one-way clutch 52. Moreover, the high-speed one-way clutch 52 is attached to the outer periphery of the right side of the medium-diameter cylindrical part 29a of the resultant-force transmission member 29. The high-speed one-way clutch 52 includes cams (ratchet claw) 52a that are urged by a spring (annular coil spring) S so as to protrude (rise) to the outer periphery of the high-speed one-way clutch 52. The cams 52a rotating in a predetermined direction are integrally engaged with the teeth 41a of the high-speed reduction gear 41. In the present embodiment, as shown in FIGS. 4 and 5, the low-speed one-way clutch 51 and the high-speed one-way clutch 52 overlap each other perpendicularly to the axis of the crank shaft 7a. The present invention is not limited to this configuration.

For example, as shown in FIGS. 5 to 7, the selection clutch 45 is axially movable on the outer periphery of the left side of the medium-diameter cylindrical part 29a of the resultant-force transmission member 29 with spline parts 29c and 45a interposed between the selection clutch 45 and the medium-diameter cylindrical part 29a. As schematically shown in FIG. 7, the spline part 45a protruding inward is formed on the left side of the inner periphery of the selection clutch 45 and an inclined surface 45b is formed at a corner on the right side of the inner periphery of the selection clutch 45. The inclined surface 45b laterally extends to the outer periphery so as to guide the cam 52a of the high-speed one-way clutch 52 in an inclined position (not in an upright position). Moreover, a recess 45c is formed on the outer periphery of the selection clutch 45. A clutch driving arm 48 having a holding arm substantially shaped like a letter C is fit into the recess 45c. For example, as shown in FIGS. 3(b) and 10, the clutch driving arm 48 is movable with a clutch drive shaft 49 that is supported so as to move in parallel with the crank shaft 7a. Moreover, a clutch interlocking cylinder 43 is disposed next to the clutch driving arm 48 with a washer 42 interposed between the clutch interlocking cylinder 43 and the clutch driving arm 48 so as to be fit onto the clutch drive shaft 49. The clutch interlocking cylinder 43 is movable with the clutch driving arm 48.

As shown in FIGS. 4 and 5, when the selection clutch 45 is located at a right position with the clutch driving arm 48, the cams 52a of the high-speed one-way clutch 52 are inclined as shown in FIGS. 5 and 6(a), separating the high-speed one-way clutch 52 and the high-speed reduction gear 41 from each other. This configuration prevents transmission of a force from the high-speed reduction gear 41 to the resultant-force transmission member 29. As shown in FIGS. 8 and 9, when the selection clutch 45 is located at a left position-with the clutch driving arm 48, the selection clutch 45 is separated from the cams 52a of the high-speed one-way clutch 52, thereby raising the cams 52a of the high-speed one-way clutch 52. Consequently, the high-speed one-way clutch 52 and the high-speed reduction gear 41 are engaged with each other so as to transmit a force from the high-speed reduction gear 41 to the resultant-force transmission member 29.

For example, as shown in FIGS. 10 and 11, the clutch drive shaft 49 having the attached clutch driving arm 48 is driven via a transmission link 56 that is engaged with one end of a gear change cable 55 for transmitting an operation of the manual gear change part 18 and pivots about a supporting point 56a. The clutch interlocking cylinder 43 movably supported with the clutch driving arm 48 and the clutch drive shaft 49 has a small-diameter cylindrical part 43b, an inclined surface 43c radially and obliquely extending from one end of the small-diameter cylindrical part 43b, and a large-diameter part 43d connected to one end of the inclined surface 43c. Furthermore, two position sensors (position detectors) 57 and 58 for detecting the position of the clutch interlocking cylinder 43 in synchronization with the clutch driving arm 48 are disposed near the clutch interlocking cylinder 43. In FIGS. 10 and 11, reference numerals 22c and 22d denote supporting parts that support the clutch drive shaft 49 movably in the axial direction, reference numeral 59 denotes an engagement ring that is attached to the clutch drive shaft 49 and is engaged with a distal arm 56b of the transmission link 56, reference numeral 46 denotes a clutch urging spring that urges the clutch drive shaft 49, the selection clutch 45, and the clutch interlocking cylinder 43 in a moving direction to the right (a direction along which the selection clutch 45 is engaged with the cams 52a of the high-speed one-way clutch 52) as shown in, for example, FIG. 10.

The selection clutch 45 is moved through, for example, the gear change cable 55, the clutch drive shaft 49, and the clutch driving arm 48 in response to an operation of the manual gear change part 18. For example, if the manual gear change part 18 is set at a low gear (first gear) (if the clutch driving arm 48 and the selection clutch 45 or the like are set at a low-speed position), as shown in FIG. 10(a), detecting portions 57a and 58a of the first and second position sensors 57 and 58 are both placed in an ON state without being pressed. When the manual gear change part 18 is being moved from the low gear (first gear) to a high gear (second gear) (if the clutch driving arm 48, the clutch interlocking cylinder 43, and the selection clutch 45 or the like are located at an intermediate position), as shown in FIG. 10(b), the detecting portion 57a of the first position sensor 57 is pressed into an OFF state while the detecting portion 58a of the second position sensor 58 is kept in an ON state without being pressed. If the manual gear change part 18 is set at the high gear (second gear) (if the clutch driving arm 48, the clutch interlocking cylinder 43, and the selection clutch 45 or the like are located at a high-speed position), as shown in FIG. 11, the detecting portions of the first and second position sensors 57 and 58 are both pressed into an OFF state.

Subsequently, when the position sensors 57 and 58 detect that the clutch driving arm 48 and the clutch interlocking cylinder 43, which serve as components interlocking with the selection clutch 45, move from the high-speed position to the low-speed position, e.g., from the high-speed position to the intermediate position, the control unit 24 controls the motor 21 to temporarily reduce an auxiliary driving force, allowing a satisfactory switching operation from the high gear to the low gear.

In this configuration, if the manual gear change part 18 is set at the low gear (first gear), as shown in FIGS. 4, 5, 6(a), the selection clutch 45 is engaged with the high-speed one-way clutch 52 such that the cams (ratchet claws) 52a of the high-speed one-way clutch 52 are inclined (not in an upright position). Thus, the resultant-force transmission member 29 is separated from the high-speed reduction gear 41 and only the low-speed reduction gear 36 is connected via the low-speed one-way clutch 51. This combines a human driving force with an auxiliary driving force from the motor 21 and a force from the low-speed reduction gear 36 rotating with a low speed, transmits the resultant force to the resultant-force transmission member 29, and then outputs the force from the driving sprocket 13.

In this configuration, if the manual gear change part 18 is set at the high gear (second gear), as shown in FIGS. 6(b) and 7 to 9, the selection clutch 45 is disengaged from the high-speed one-way clutch 52 and the cams (ratchet claws) 52a of the high-speed one-way clutch 52 can be kept upright. This configuration can connect the resultant-force transmission member 29 to the high-speed reduction gear 41 via the high-speed one-way clutch 52 and also to the low-speed reduction gear 36 via the low-speed one-way clutch 51. However, the high-speed reduction gear 41 rotates faster than the low-speed reduction gear 36, thereby rotating the low-speed reduction gear 36 at idle and connecting the high-speed reduction gear 41. This combines a human driving force with an auxiliary driving force from the motor 21 and a force from the high-speed reduction gear 41 rotating with a high torque, transmits the resultant force to the resultant-force transmission member 29, and then outputs the force from the driving sprocket 13.

With this configuration, an auxiliary driving force from the motor 21 is switched to the low-speed reduction gear 36 or the high-speed reduction gear 41 and is transmitted to the resultant-force transmission member 29 without being placed into a so-called neutral state (idle state). This configuration can prevent discomfort to a rider on an electrically assisted bicycle, for example, a rapid reduction in load of pedaling during a gear change. This configuration can also prevent a large impact during a gear change so as not to cause a shock to a rider, reduce the lives of the reduction gears 36 to 41, or make abnormal noise as in a temporary neutral state, leading to higher reliability. Moreover, the speed reduction mechanism 25 changes the gear for the resultant force of a human driving force and an auxiliary driving force from the motor 21, advantageously obtaining a larger force output range than in a configuration where a human driving force is combined with an auxiliary driving force after a gear change or in a configuration where an auxiliary driving force is combined with a human driving force after a gear change.

With this configuration, the low-speed one-way clutch 51 and the high-speed one-way clutch 52 overlap each other perpendicularly to the axis of the crank shaft 7a. Thus, this configuration can arrange the low-speed one-way clutch 51 and the high-speed one-way clutch 52 with smaller dimensions in the axial direction of the crank shaft 7a than in a configuration where the low-speed one-way clutch 51 and the high-speed one-way clutch 52 are disposed at different positions perpendicularly to the axis of the crank shaft 7a, obtaining a small size. The present invention is not limited to this configuration. The low-speed one-way clutch 51 and the high-speed one-way clutch 52 may be disposed at different positions in the axial direction of the crank shaft 7a. Also in this case, the gear can be satisfactorily changed without being placed in a neutral state (idle state).

This configuration includes the clutch driving arm 48 that acts as a component interlocking with the selection clutch 45 and the position sensors 57 and 58 that act as position detectors for detecting the position of the clutch interlocking cylinder 43. Thus, this configuration can detect whether the selection clutch 45, the clutch driving arm 48, and the clutch interlocking cylinder 43 or the like are located at the low-speed position (first gear position) or the high-speed position (second gear position), thereby controlling an auxiliary driving force according to the gears of the low-speed position and the high-speed position.

With this configuration, the position sensors 57 and 58 can detect the selection clutch 45, the clutch driving arm 48, and the clutch interlocking cylinder 43 (interlocking component) located at an intermediate position between the low-speed position and the high-speed position as well as the low-speed position and the high-speed position. Thus, this configuration can detect switching between the low-speed position and the high-speed position so as to perform a satisfactory minute controlling operation (e.g., a controlling operation for an auxiliary driving force) according to the circumstances.

With this configuration, when the clutch driving arm 48 is moved from the high-speed position to the low-speed position by a switching operation (so-called downshift) performed by a rider and so on from the high gear to the low gear, an auxiliary driving force temporarily decreases, facilitating switching of the high-speed one-way clutch 52 from an engaged state to a disengaged state. Specifically, in a switching operation from the high gear to the low gear, a relatively large force tends to be continuously applied during pedaling with the pedals 8 on an uphill slope and so on. Thus, for example, the cams (ratchet claws) 52a of the high-speed one-way clutch 52 may strongly come into contact with the teeth of the high-speed reduction gear 41 so as to be hardly changed from an engaged state to a disengaged state (the cams 52a may be kept upright). Specifically, at this point, only the urging force of the clutch urging spring 46 is applied in a direction along which the clutch driving arm 48 moves from the high-speed position to the low-speed position. Thus, the cams 52a of the high-speed one-way clutch 52 are hardly changed from an engaged state to a disengaged state. In contrast, as described above, the present embodiment temporarily reduces an auxiliary driving force so as to facilitate disengagement of, for example, the cams 52a of the high-speed one-way clutch 52 from the teeth of the high-speed reduction gear 41. This facilitates a gear change with improved convenience.

With this configuration, the interlocking cylindrical part 23 is provided between the human-power transmission member 28 and the low-speed reduction gear 36. Thus, even if the magnetostriction generation portion 31b of the torque sensor 31 for detecting a human driving force is formed on the human-power transmission member 28, vibrations occurring during the switching of the selection clutch 45 and vibrations from the one-way clutch 30 for interrupting an auxiliary driving force are hardly transmitted to the human-power transmission member 28. This improves the reliability of the torque sensor 31 as compared with the absence of the interlocking cylindrical part 33.

With this configuration, the rotation detector 10 that detects the rotation of the interlocking cylindrical part 33 is provided so as to detect the rotations of the interlocking cylindrical part 33 and the human-power transmission member 28, that is, the rotation of the crank shaft 7a. Instead of the detection of the rotation of the interlocking cylindrical part 33 by the rotation detector 10, the rotation detector 10 may detect the rotation of the human-power transmission member 28.

With this configuration, a gear changing operation by the manual gear change part 18 attached to the handle bar 5 is transmitted to the clutch driving arm 48 and the selection clutch 45 through the gear change cable 55 so as to change the gear. The present invention is not limited to this configuration. A detection sensor may be provided to detect a gear changing operation performed by the manual gear change part 18 and a clutch moving motor may be provided to move the clutch driving arm 48 and the selection clutch 45. The clutch moving motor may move the clutch driving arm 48 and the selection clutch 45 when a gear changing operation of the manual gear change part 18 is detected.

In this configuration, during a switching operation from the high gear to the low gear (so-called downshift), the cams (ratchet claws) 52a of the high-speed one-way clutch 52 may strongly come into contact with, for example, the teeth of the high-speed reduction gear 41 and may be hardly changed from an engaged state to a disengaged state. Thus, in the present embodiment, the clutch driving arm 48 interlocking with the selection clutch 45 is provided and the position sensors 57 and 58 are provided to detect the position of the clutch interlocking cylinder 43. When the position sensors 57 and 58 detect a movement of the clutch driving arm 48 and the clutch interlocking cylinder 43 from the high-speed position to the low-speed position, the control unit 24 controls the motor 21 so as to temporarily reduce an auxiliary driving force.

However, the present invention is not limited to this configuration. In addition to or instead of the configuration of the present embodiment (the device for detecting the position of the clutch driving arm 48 is provided and an auxiliary driving force is temporarily reduced when a movement of the clutch driving arm 48 or the like from the high-speed position to the low-speed position is detected), a force application mechanism may be provided to apply a force causing the selection clutch 45 or the like to incline the cams (ratchet claws) 52a of the high-speed one-way clutch 52 when the clutch driving arm 48 or the like is moved from the high-speed position to the low-speed position (so-called downshift).

FIGS. 12 to 16 show a configuration including the force application mechanism.

In this embodiment, as shown in FIGS. 12 to 15, the right side of the recess 45c of the selection clutch 45 comes into contact with the clutch driving arm 48 and has a plurality of protrusions 45d that are circumferentially formed so as to protrude to the left. Moreover, in the present embodiment, both sides of the protrusion 45d of the selection clutch 45 are connected obliquely to points where the protrusions 45d are not provided. Also in the present embodiment, as in FIGS. 10 and 11, the clutch urging spring 46 is provided as an urging device (See FIGS. 10 and 11). The urging force of the clutch urging spring 46 urges the clutch driving arm 48 to the right in FIGS. 10 and 11 (in a direction that engages the selection clutch 45 with the cams (ratchet claws) 52a of the high-speed one-way clutch 52). In FIGS. 12(a) to 12(c), the left side of the recess 45c of the selection clutch 45 is omitted to clearly illustrate the protrusions 45d of the selection clutch 45.

As shown in FIGS. 13(a), 13(b), and 14(a) to 14(c) (FIGS. 13(a) and 13(b) show a high speed (second speed) gear and FIGS. 14(a) to 14(c) show a standby state of a gear change from the high speed (second speed) to a low speed (first speed)), when the clutch driving arm 48 or the like is moving from the high-speed position to the low-speed position (to the right in FIG. 13), the urging force of the clutch urging spring 46 is applied to the clutch driving arm 48. Thus, the right side of a distal end 48b of the clutch driving arm 4B rotates in contact with the protrusion 45d of the selection clutch 45 that rotates with the resultant-force transmission member 28. FIGS. 15(a) to 15(c) show that the clutch driving arm 48 or the like has been completely moved to the low-speed position.

Thus, the selection clutch 45 rotates with a force applied to a high-gear side (the right side in FIGS. 13(a) and 14(a)) (an impact force applied when the right side of the distal end 48b of the clutch driving arm 48 passes over the protrusion 45d of the selection clutch 45). This allows the selection clutch 45 to easily incline the cams (ratchet claws) 52a of the high-speed one-way clutch 52, easily changing the high-speed one-way clutch 52 from an engaged state to a disengaged state. Specifically, the protrusions 45d of the selection clutch 45 act as impact force generators that apply an impact force for moving the selection clutch 45 along the axial direction of the crank shaft 7a using the urging force of the clutch urging spring 46 acting as an urging device.

As shown in FIGS. 14(c), 15(c), 16(a), and 16(b), a plurality of protrusions 45a' are circumferentially formed on the inner periphery of the selection clutch 45 so as to protrude inward and act as detents (spline part 45a) for the resultant-force transmission member 29. For the protrusions 45a', step parts 29c' (a step part between a large-diameter surface 29f and a small-diameter surface 29g in FIGS. 16(a) and 16(b)) are formed on the outer periphery of the resultant-force transmission member 29 so as to be engaged with the protrusions 45a' of the selection clutch 45 and act as the spline parts 29c. In this configuration, the resultant-force transmission member 29 and the selection clutch 45 are circumferentially formed with a clearance so as to circumferentially rotate by a certain angle, and the step part 29c' partially has an inclined surface 29h (specifically, the step part 29c' on the downstream side in the rotation direction of the resultant-force transmission member 29) that extends the small-diameter surface 29g to the right.

Since the resultant-force transmission member 29 and the selection clutch 45 can circumferentially rotate by a certain angle, the protrusions 45d of the selection clutch 45 come into contact with the downstream side in the rotation direction of the resultant-force transmission member 29 on the step parts 29c' of the resultant-force transmission member 29, and the clutch driving arm 48 or the like moves from the high-speed position to the low-speed position. At this point, the protrusions 45a' of the selection clutch 45 come into contact with the inclined surfaces 29h of the step parts 29c' of the resultant-force transmission member 29. Consequently, a component force based on a reaction force from the inclined surfaces 29h accelerates a movement of the selection clutch 45 to the right while applying a force (component force) that moves the selection clutch 45 to the high-gear side (to the right in, for example, FIG. 16). This allows the selection clutch 45 to press the cams (ratchet claws) 52a of the high-speed one-way clutch 52 with a larger force in the inclining direction of the cams (ratchet claws) 52a, facilitating disengagement of the engaged high-speed one-way clutch 52.

As described above, in the present embodiment, the force application mechanism is configured such that a force is applied by the clutch urging spring 46, the protrusions (impact force generators) 45d of the selection clutch 45, the inclined surfaces 29h of the step parts 29d of the resultant-force transmission member 29, and the protrusions 45a' of the selection clutch 45 so as to incline the cams (ratchet claws) 52a of the high-speed one-way clutch 52. When the force application mechanism performs a switching operation (so-called downshift) from the high gear to the low gear, the selection clutch 45 relatively easily inclines the cams (ratchet claws) 52a of the high-speed one-way clutch 52. This satisfactorily changes the high-speed one-way clutch 52 to a disengaged state and preferably performs a switching operation from the high gear to the low gear. Thus, the electrically assisted bicycle 1 can be improved in reliability.

According to the present embodiment, the force application mechanism has the protrusions 45d acting as impact force generators that apply an impact force for moving the selection clutch 45 in the axial direction of the crank shaft 7a by using the urging force of the clutch urging spring 46 acting as an urging device, and the inclined surfaces 29h that generate a component force for moving the selection clutch 45 in a direction that engages the selection clutch 45 with the high-speed one-way clutch 52 when the selection clutch 45 is being moved from the high-speed position to the low-speed position. Thus, the combined effect of the impact force generating function of the protrusions 45d and the component force generating function of the inclined surfaces 29h quite satisfactorily disengages the high-speed one-way clutch 52 during so-called downshift. This quite satisfactorily performs a switching operation from the high gear to the low gear, further improving the reliability of the electrically assisted bicycle 1.

However, the present invention is not limited to this configuration. The force application mechanism may have only one of the impact force generating function of the protrusions 45d and the component force generating function of the inclined surfaces 29h. Also in this configuration, a switching operation can be satisfactorily performed from the high gear to the low gear.

In the present embodiment, the inclined surfaces 29h having the component force generating function are formed on the outer periphery of the resultant-force transmission member 29 and the protrusions 45a' that come into contact with the inclined surfaces 29h are formed on the selection clutch 45. The present invention is not limited to this configuration. The inclined surfaces having the component force generating function may be formed on the selection clutch 45 while the protrusions that come into contact with the inclined surfaces may be formed on the resultant-force transmission member 29.

In the embodiment shown in FIGS. 12 to 16, the resultant-force transmission member 29 and the selection clutch 45 circumferentially rotate by a certain angle. The inclined surfaces 29h are provided to generate a component force for moving the selection clutch 45 in a direction that engages the selection clutch 45 with the high-speed one-way clutch 52 when the selection clutch 45 is being moved from the high-speed position to the low-speed position. The present invention is not limited to this configuration.

FIGS. 17 to 23 show another embodiment of the present invention. As shown in FIGS. 17 and 18, in the present embodiment, detents such as a spline part 45a are not provided which restrict the rotational range of a resultant-force transmission member 29 (specifically, a point on the outer periphery of the resultant-force transmission member 29) and a selection clutch 45 (specifically, a point on the inner periphery of the selection clutch 45) with respect to the circumferential direction. The resultant-force transmission member 29 and the selection clutch 45 are fit to each other so as to rotate (circumferentially rotate) relative to each other around the axis of a crank shaft 7a. Reference numeral 29j in FIG. 17 denotes an indentation that is formed on the resultant-force transmission member 29 so as to store a cam (ratchet claw) 52a of a high-speed one-way clutch 52.

As shown in FIGS. 18 to 23, storage recesses 45g where the cams 52a of the high-speed one-way clutch 52 can be stored in upright positions are provided as force application mechanisms on the inner periphery of the selection clutch 45. Continuing from the storage recess 45g, an inner inclined surface 45f is formed so as to decrease in diameter in a circumferential movement and incline the cam 52a, and a small-diameter inclination keeping surface 45h is formed so as to keep the inclination of the cam 52a.

The storage recess 45g and the inner inclined surface 45f are formed in the right part of the inner periphery of the selection clutch 45 where the cams (ratchet claws) 52a of the high-speed one-way clutch 52 are stored or contacted with during a switching operation from a high gear to a low gear (so-called downshift). The inner inclined surface 45f is inclined on the inner periphery of the selection clutch 45 so as to decrease in diameter in a circumferential movement along the rotation direction of the resultant-force transmission member 29. In the present embodiment, the cams (ratchet claws) 52a of the high-speed one-way clutch 52 are provided at three points in the circumferential direction (circumferentially spaced at 120°). For the cams (ratchet claws) 52a, the storage recesses 45g are formed at three points so as to store the cams (ratchet claws) 52a protruding outward (upright) from the resultant-force transmission member 29 where the high-speed one-way clutch 52 is provided. Continuing from the storage recess 45g, the inner inclined surface 45f is gradually inclined so as to decrease in diameter in a circumferential movement along the rotation direction of the resultant-force transmission member 29. Moreover, the inclination keeping surface 45h that keeps the inclination of the cam 52a is formed in the left part from the center of the inner periphery of the selection clutch 45 with the same dimensions (thickness) as a minimum diameter point of the inner inclined surface 45f. The number of the cams (ratchet claws) 52a of the high-speed one-way clutch 52 is not limited to three and thus may be two or four or more. The storage recesses 45g and the inner inclined surfaces 45f may be formed accordingly.

In the same manner as in the embodiment shown in FIGS. 12 to 16, as shown in FIG. 18, the right side of a recess 45c of the selection clutch 45 in the present embodiment comes into contact with a clutch driving arm 48 and has a plurality of protrusions 45d that are circumferentially formed so as to protrude to the left. Also in the present embodiment, both sides of the protrusion 45d of the selection clutch 45 are obliquely connected to a point where the protrusions 45d are not provided. When the selection clutch 45 is rotated also in the rotation direction of the resultant-force transmission member 29 at a high speed (second speed), an angle of inclination is small at a contact point of the protrusion 45d so as to reduce vibrations of the clutch driving arm 48 in contact with the protrusions 45d. Also in the present embodiment, the clutch urging spring 46 serving as an urging device is provided in the same manner as in FIGS. 10 and 11. The selection clutch 45 is urged in a direction that engages the selection clutch 45 with the cams (ratchet claws) 52a of the high-speed one-way clutch 52. In FIGS. 18(a) to 18(c), the left side of the recess 45c of the selection clutch 45 is omitted to clearly illustrate the protrusions 45d of the selection clutch 45.

FIGS. 19(a) to 19(d) show a high speed (second speed). FIGS. 20(a) to 20(d), 21(a) to 21(d), and 22(a) to 22(d) show a standby state of a gear change from the high speed (second speed) to a low speed (first speed). FIGS. 23(a) to 23(d) show that the gear has been switched to the low speed (first speed) (completely moved to a low-speed position). As shown in FIGS. 19(a) to 19(d), the selection clutch 45 is separated from the cams (ratchet claws) 52a of the high-speed one-way clutch 52 and the cams (ratchet claws) 52a of the high-speed one-way clutch 52 are raised into engagement with the teeth of the high-speed reduction gear 41.

In a switching operation from a high gear to a low gear (so-called downshift), a movement of the clutch driving arm 48 from a high-speed position to the low-speed position (to the right in FIGS. 19(a) and 20(a) and so on) applies the urging force of the clutch urging spring 46 to the clutch driving arm 48. Thus, the right side of a distal end 48b of the clutch driving arm 48 rotates in contact with the protrusion 45d of the selection clutch 45 that rotates with the resultant-force transmission member 28.

Thus, the selection clutch 45 rotates with a force applied to a high-gear side (the right side in FIGS. 19(a) and 20(a)) (an impact applied when the right side of the distal end 48b of the clutch driving arm 48 passes over the protrusion 45d of the selection clutch 45). This allows the selection clutch 45 to easily incline the cams (ratchet claws) 52a of the high-speed one-way clutch 52, easily changing the high-speed one-way clutch 52 from an engaged state to a disengaged state. Specifically, the protrusions 45d of the selection clutch 45 act as impact force generators that apply an impact force for moving the selection clutch 45 along the axial direction of the crank shaft 7a by using the urging force of the clutch urging spring 46 acting as an urging device. In this respect, the same effect is obtained as in the embodiment of FIGS. 12 to 15.

The distal end 48b of the clutch driving arm 48 comes into contact with the protrusion 45d of the selection clutch 45 and thus the selection clutch 45 is less likely to rotate in a circumferential direction. This rotates the selection clutch 45 with a lower rotation speed than the resultant-force transmission member 28. At this point, the selection clutch 45 axially moves toward the cams (ratchet claws) 52a of the high-speed one-way clutch 52 (to the right in FIGS. 19(a) and 20(a)) and thus when the cams (ratchet claws) 52a of the high-speed one-way clutch 52 are located on the side of the storage recess 45g of the selection clutch 45, the cams (ratchet claws) 52a of the high-speed one-way clutch 52 are stored in upright positions in the storage recesses 45g of the selection clutch 45.

Moreover, the high-speed one-way clutch 52 rotating with the resultant-force transmission member 29 allows the cams (ratchet claws) 52a of the high-speed one-way clutch 52 to rotate in contact with the inner inclined surfaces 45f circumferentially formed so as to continue to the storage recesses 45g. The inner inclined surface 45f is inclined so as to decrease in diameter in a circumferential movement. Thus, as shown in FIGS. 21(a) to 21(d) and 22(a) to 22(d), the high-speed one-way clutch 52 rotates with the inclined cams 52a. Subsequently, the clutch driving arm 48 moves to the low-speed position (to the right in FIGS. 22(a) and 23(a)) and thus the cams (ratchet claws) 52a of the high-speed one-way clutch 52 in contact with the small-diameter inclination keeping surface 45h are kept in an inclined position. This easily disengages the cams 52a of the high-speed one-way clutch 52 from, for example, the teeth of the high-speed reduction gear 41 during a switching operation from the high gear to the low gear (so-called downshift), facilitating a gear change so as to improve convenience.

In the foregoing embodiment, the chain 15 is used as an endless driving force transmission member and a force from the driving sprocket 13 is transmitted to the rear sprocket 14 through the chain 15. The present invention is not limited to this configuration. As shown in FIG. 24, the endless driving force transmission member may be a toothed belt 19 through which a force from a driving gear 13' corresponding to a driving sprocket is transmitted to a rear gear (not shown).

In the foregoing embodiment, the motor drive unit 20 has a two-speed gear changing function. However, the present invention is not limited to this configuration and may include reduction gears for first to third speeds, three one-way clutches for a gear change, and two selection clutches or the like such that only the first-speed one-way clutch is activated at the first speed, only the first-speed one-way clutch and the second-speed one-way clutch are activated at the second speed, and all of the one-way clutches are activated at the third speed. Thus, a three-speed gear changing function can be added to the motor drive unit 20. Also in this case, a gear can be changed without being placed in a neutral state (idle state).

### Industrial Applicability

The present invention is applicable to an electrically assisted bicycle capable of traveling with a combination of a human driving force generated by a pedal force from a pedal and an auxiliary driving force generated by a motor.

## Claims

1. An electrically assisted bicycle (1) comprising a motor drive unit (20) with a motor (21), the electrically assisted bicycle (1) being capable of traveling with a combination of a human driving force generated by a pedal force from a pedal (8) and an auxiliary driving force generated by the motor (21),
wherein the electrically assisted bicycle (1) comprises a crank shaft (7a) that receives a human driving force transmitted from the pedal (8) and rotates about a different axis from the motor (21),
the crank shaft (7a) has a human-power transmission member (7b) on an outer periphery of the crank shaft (7a), the human-power transmission member (7b) receiving the transmitted human driving force,
the crank shaft (7a) has a resultant-force transmission member (29) on the outer periphery of the crank shaft (7a), the resultant-force transmission member (29) receiving a resultant force of a human driving force and an auxiliary driving force from the motor (21),
the electrically assisted bicycle (1) comprises a speed reduction mechanism (25) the resultant force transmitted to the resultant-force transmission member (29) through the speed reduction mechanism (25)is transmitted to a rear wheel(4) through a driving force output wheel coaxial with the crank shaft (7a)and an endless driving force transmission member (15) looped over the driving force output wheel; **characterized in that**
the speed reduction mechanism (25) has pairs of reduction gears (27, 40; 38, 36; 39, 41)and a selection clutch; the speed reduction mechanism (25) combining the human driving force and the auxiliary driving force and changing the gears for a resultant force of the human driving force and the auxiliary driving force,
the motor drive unit (20) contains the human-power transmission member (7b), the resultant-force transmission member (29), and the speed reduction mechanism (25),
the speed reduction mechanism (25) includes:
an intermediate shaft (44) disposed in parallel with the crank shaft (7a);
a plurality of intermediate-shaft reduction gears (37, 38, 39) provided on the intermediate shaft (44);
a low-speed reduction gear (36) that is rotatable on the outer periphery of the crank shaft (7a) and receives a transmitted human driving force and a transmitted auxiliary driving force;
a high-speed reduction gear (41) that is rotatable on the outer periphery of the crank shaft (7a) and receives a transmitted human driving force and a transmitted auxiliary driving force;
a low-speed one-way clutch (51) disposed on a driving force transmission path from the low-speed reduction gear (36) to the resultant-force transmission member (29);
a high-speed one-way clutch (52) disposed on a driving force transmission path from the high-speed reduction gear (41) to the resultant-force transmission member (29); and
the selection clutch (45) removably engaged with the high-speed one-way clutch (52), and
the selection clutch (45) is engaged with the high-speed one-way clutch (52) so as to place the high-speed one-way clutch (52) into a free state, whereas the selection clutch (45) is disengaged from the high-speed one-way clutch (52) so as to activate the high-speed one-way clutch (52).

2. The electrically assisted bicycle (1) according to claim 1, wherein the selection clutch (45) is slidable on the resultant-force transmission member (29).

3. The electrically assisted bicycle (1) according to one of claims 1 and 2, wherein the low-speed one-way clutch (51) and the high-speed one-way clutch (52) overlap each other perpendicularly to the axis of the crank shaft (7).

4. The electrically assisted bicycle (1) according to any one of claims 1 to 3, further comprising:
a control unit (24) ; and
a position detector (57, 58) that detects a position of one of the selection clutch (45) and an interlocking component that interlocks with the selection clutch (45).

5. The electrically assisted bicycle (1) according to claim 4, wherein the position detector (57, 58) is capable of detecting whether one of the selection clutch (45) and the interlocking component is located at a low-speed position, a high-speed position, or an intermediate position between the low-speed position and the high-speed position.

6. The electrically assisted bicycle (1) according to one of claims 4 and 5, wherein when the position detector (57, 58) detects a movement of one of the selection clutch (45) and the interlocking component from the high-speed position to the low-speed position, the control unit(24) controls the motor (21) so as to temporarily reduce an auxiliary driving force.

7. The electrically assisted bicycle (1) according to one of claims 1 and 2, further comprising a force application mechanism that applies a force causing the selection clutch (45) to incline cams of the high-speed one-way clutch (52) when the selection clutch (45) is being moved from the high-speed position to the low-speed position.

8. The electrically assisted bicycle (1) according to claim 7, wherein the force application mechanism includes:
an urging device that urges the selection clutch so as to incline the cams of the high-speed one-way clutch; and
an impact force generator that applies an impact force for moving the selection clutch in an axial direction of the crank shaft (7a) using an urging force of the urging device.

9. The electrically assisted bicycle (1) according to claim 8, wherein the impact force generator is a protrusion provided on a contact surface of the selection clutch with a clutch driving arm that drives the selection clutch.

10. The electrically assisted bicycle (1) according to any one of claims 7 to 9, wherein the force application mechanism has an inclined surface that generates a component force for moving the selection clutch (45) in a direction that engages the selection clutch (45) with the high-speed one-way clutch (52) when the selection clutch (45) is being moved from the high-speed position to the low-speed position.

11. The electrically assisted bicycle (11) according to claim 10, wherein the selection clutch (45) and the resultant-force transmission member (29) are fit to each other so as to rotate relative to each other around the axis of the crank shaft (7a) within a predetermined angle, one of the selection clutch (45) and the resultant-force transmission member (29) has the inclined surface, and the other of the selection clutch (45) and the resultant-force transmission member (29) has protrusions that come into contact with the inclined surface.

12. The electrically assisted bicycle (1) according to any one of claims 7 to 9, wherein the selection clutch (45) and the resultant-force transmission member (29) are fit to each other so as to rotate relative to each other around the axis of the crank shaft (7a), and the force application mechanism includes:
a storage recess that is formed on an inner periphery of the selection clutch (45) and stores the raised cam of the high-speed one-way clutch (52);
an inner inclined surface that continues from the storage recess and decreases in diameter in a circumferential movement on the inner periphery of the selection clutch (45) so as to incline the cam; and
an inclination keeping surface that is formed on the inner periphery of the selection clutch (45) and keeps an inclination of the cam.

13. The electrically assisted bicycle (1) according to any one of claims 1 to 12, wherein the human-power transmission member (7b) has a magnetostriction generation portion for a torque sensor that detects the human driving force.

14. The electrically assisted bicycle (1) according to any one of claims 1 to 13, further comprising a one-way clutch (30) for interrupting an auxiliary driving force on a transmission path for a human driving force between the crank shaft (7a) and the low-speed reduction gear (36), the one-way clutch preventing transmission of an auxiliary driving force from the motor (21) to the crank shaft (7a).

15. The electrically assisted bicycle according to claim 14, further comprising an interlocking cylindrical part provided on the outer periphery of the crank shaft (7a) so as to be engaged with the human-power transmission member (7b),
wherein the one-way clutch (30) for interrupting an auxiliary driving force is disposed between the interlocking cylindrical part and the low-speed reduction gear (36).

16. The electrically assisted bicycle (1) according to claim 15, further comprising a rotation detector (10) that detects a rotation of one of the interlocking cylindrical part and the human-power transmission member.

17. The electrically assisted bicycle (1) according to any one of claims 1 to 16, wherein the endless driving force transmission member (15) is a toothed belt.

## Patentansprüche

1. Fahrrad (1) mit elektrischer Unterstützung, das eine Motorantriebs-Einheit (20) mit einem Motor (21) umfasst, wobei das Fahrrad (1) mit elektrischer Unterstützung mit einer Kombination aus einer menschlichen Antriebskraft, die mittels einer Pedalkraft über ein Pedal (8) erzeugt wird, und einer Zusatz-Antriebskraft fahren kann, die von dem Motor (21) erzeugt wird,
das Fahrrad (1) mit elektrischer Unterstützung eine Kurbelwelle (7a) umfasst, die eine über das Pedal (8) übertragene menschliche Antriebskraft aufnimmt und sich um eine andere Achse herum dreht als der Motor (21)
die Kurbelwelle (7a) ein Element (7b) zur Übertragung menschlicher Kraft an einem Außenumfang der Kurbelwelle (7a) aufweist, wobei das Element (7b) zur Übertragung menschlicher Kraft die übertragene menschliche Antriebskraft aufnimmt,
die Kurbelwelle (7a) ein Element (29) zur Übertragung resultierender Kraft an dem Außenumfang der Kurbelwelle (7a) aufweist, wobei das Element (29) zur Übertragung resultierender Kraft eine aus einer menschlichen Antriebskraft und einer Zusatz-Antriebskraft von dem Motor (21) resultierende Kraft aufnimmt,
das Fahrrad (1) mit elektrischer Unterstützung einen Untersetzungs-Mechanismus (25) umfasst, und die über den Untersetzungs-Mechanismus (25) zu dem Element (29) zur Übertragung resultierender Kraft übertragene resultierende Kraft über ein Antriebskraft-Ausgaberad koaxial zu der Kurbelwelle (7a) sowie ein endloses Antriebskraft-Übertragungselement (15), das über das Antriebskraft-Ausgaberad läuft, auf ein Hinterrad (4) übertragen wird;
**dadurch gekennzeichnet, dass** der Untersetzungs-Mechanismus (25) paarige Untersetzungs-Räder (27, 40; 38, 36; 39, 41) sowie eine Wähl-Kupplung (30) aufweist, der Untersetzungs-Mechanismus (25) die menschliche Antriebskraft und die Zusatz-Antriebskraft kombiniert und die Räder für eine aus der menschlichen Antriebskraft und der Zusatz-Antriebskraft resultierende Kraft ändert,
die Motorantriebs-Einheit (20) das Element (7b) zur Übertragung menschlicher Kraft, das Element (29) zur Übertragung resultierender Kraft und den Untersetzungs-Mechanismus (25) einschließt,
und der Untersetzungs-Mechanismus (25) enthält:
eine Zwischenwelle (44), die parallel zu der Kurbelwelle (7a) angeordnet ist;
eine Vielzahl von Zwischenwellen-Untersetzungs-Rädern (37, 38, 39), die sich an der Zwischenwelle (44) befinden;
ein langsamlaufendes Untersetzungs-Rad (36), das sich an dem Außenumfang der Kurbelwelle (7a) drehen kann und eine übertragene menschliche Antriebskraft sowie eine übertragene Zusatz-Antriebskraft aufnimmt;
ein schnelllaufendes Untersetzungs-Rad (41), das sich an dem Außenumfang der Kurbelwelle (7a) drehen kann und eine übertragene menschliche Antriebskraft sowie eine übertragene Zusatz-Antriebskraft aufnimmt;
eine Langsamlauf-Freilaufkupplung (51), die an einem Antriebskraft-Übertragungsweg von dem langsamlaufenden Untersetzungs-Rad (36) zu dem Element (29) zur Übertragung resultierender Kraft angeordnet ist;
eine Schnelllauf-Freilaufkupplung (52), die an einem Antriebskraft-Übertragungsweg von dem schnelllaufenden Untersetzungs-Rad (41) zu dem Element (29) zur Übertragung resultierender Kraft angeordnet ist;
wobei die Wähl-Kupplung (45) lösbar mit der Schnelllauf-Freilaufkupplung (52) in Eingriff ist, und
die Wähl-Kupplung (45) mit der Schnelllauf-Freilaufkupplung (52) in Eingriff gebracht wird, um die Schnelllauf-Freilaufkupplung (52) in einen freien Zustand zu versetzen, während die Wähl-Kupplung (45) von der Schnelllauf-Freilaufkupplung (52) gelöst wird, um die Schnelllauf-Freilaufkupplung (52) zu aktivieren.

2. Fahrrad (1) mit elektrischer Unterstützung nach Anspruch 1, wobei die Wähl-Kupplung (45) auf dem Element (29) zur Übertragung resultierender Kraft verschoben werden kann.

3. Fahrrad (1) mit elektrischer Unterstützung nach einem der Ansprüche 1 und 2, wobei die Langsamlauf-Freilaufkupplung (51) und die Schnelllauf-Freilaufkupplung (52) einander senkrecht zu der Achse der Kurbelwelle (7) überlappen.

4. Fahrrad (1) mit elektrischer Unterstützung nach einem der Ansprüche 1 bis 3, das des Weiteren umfasst:
eine Steuerungs-Einheit (24); und
einen Positions-Detektor (57, 58), der eine Position der Wähl-Kupplung (45) oder einer eingreifenden Komponente erfasst, die mit der Wähl-Kupplung (45) in Eingriff kommt.

5. Fahrrad (1) mit elektrischer Unterstützung nach Anspruch 4, wobei der Positions-Detektor (57, 58) in der Lage ist, zu erfassen, ob die Wähl-Kupplung (45) oder die eingreifende Komponente sich an einer Langsamlauf-Position, einer Schnelllauf-Position oder an einer Zwischen-Position zwischen der Langsamlauf-Position und der Schnelllauf-Position befindet.

6. Fahrrad (1) mit elektrischer Unterstützung nach einem der Ansprüche 4 und 5, wobei, wenn der Positions-Detektor (57, 58) eine Bewegung der Wähl-Kupplung (45) oder der eingreifenden Komponente von der Schnelllauf-Position an die Langsamlauf-Position erfasst, die Steuerungs-Einheit (24) den Motor (21) so steuert, dass eine Zusatz-Antriebskraft vorübergehend reduziert wird.

7. Fahrrad (1) mit elektrischer Unterstützung nach einem der Ansprüche 1 und 2, das des Weiteren einen Kraftausübungs-Mechanismus umfasst, der eine Kraft ausübt, durch die die Wähl-Kupplung (45) veranlasst wird, Nocken der Schnelllauf-Freilaufkupplung (52) zu neigen, wenn die Wähl-Kupplung (45) von der Schnelllauf-Position an die Langsamlauf-Position bewegt wird.

8. Fahrrad (1) mit elektrischer Unterstützung nach Anspruch 7, wobei der Kraftausübungs-Mechanismus enthält:
eine Drück-Einrichtung, die die Wähl-Kupplung so drückt, dass die Nocken der Schnelllauf-Freilaufkupplung geneigt werden; und
eine Stoßkraft-Erzeugungseinrichtung, die eine Stoßkraft ausübt, mit der die Wähl-Kupplung unter Einsatz einer Drück-Kraft der Drück-Einrichtung in einer axialen Richtung der Kurbelwelle (7a) bewegt wird.

9. Fahrrad (1) mit elektrischer Unterstützung nach Anspruch 8, wobei die Stoßkraft-Erzeugungseinrichtung ein Vorsprung ist, der sich an einer Kontaktfläche der Wähl-Kupplung mit einem Kupplungs-Antriebsarm befindet, der die Wähl-Kupplung antreibt.

10. Fahrrad (1) mit elektrischer Unterstützung nach einem der Ansprüche 7 bis 9, wobei der Kraftausübungs-Mechanismus eine geneigte Fläche aufweist, die eine Kraftkomponente erzeugt, durch die die Wähl-Kupplung (45) in einer Richtung bewegt wird, , in der die Wähl-Kupplung (45) mit der Schnelllauf-Freilaufkupplung (52) in Eingriff gebracht wird, wenn die Wähl-Kupplung (45) von der Schnelllauf-Position an die Langsamlauf-Position bewegt wird.

11. Fahrrad (11) mit elektrischer Unterstützung nach Anspruch 10, wobei die Wähl-Kupplung (45) und das Element (29) zur Übertragung resultierender Kraft so zusammengesetzt sind, dass sie sich relativ zueinander innerhalb eines vorgegebenen Winkels um die Achse der Kurbelwelle (7a) herum drehen, wobei die Wähl-Kupplung (45) oder das Element (29) zur Übertragung resultierender Kraft die geneigte Fläche aufweist und das andere Element von der Wähl-Kupplung (45) und dem Element (29) zur Übertragung resultierender Kraft Vorsprünge aufweist, die in Kontakt mit der geneigten Fläche kommen.

12. Fahrrad (1) mit elektrischer Unterstützung nach einem der Ansprüche 7 bis 9, wobei die Wähl-Kupplung (45) und das Element (29) zur Übertragung resultierender Kraft so zusammengesetzt sind, dass sie sich relativ zueinander um die Achse der Kurbelwelle (7a) herum drehen, und der Kraftausübungs-Mechanismus enthält:
eine Unterbringungs-Aussparung, die an einem Innenumfang der Wähl-Kupplung (45) ausgebildet ist und in der der angehobene Nocken der Schnelllauf-Freilaufkupplung (52) untergebracht wird;
eine innere geneigte Fläche, die sich an die Unterbringungs-Aussparung anschließt und deren Durchmesser in einer Umfangsrichtung an dem Innenumfang der Wähl-Kupplung (45) abnimmt, so dass der Nocken geneigt wird; sowie
eine Fläche zum Aufrechterhalten von Neigung, die an dem Innenumfang der Wähl-Kupplung (45) ausgebildet ist und eine Neigung des Nockens aufrechterhält.

13. Fahrrad (1) mit elektrischer Unterstützung nach einem der Ansprüche 1 bis 12, wobei das Element (28) zur Übertragung menschlicher Kraft einen Abschnitt zur Erzeugung von Magnetostriktion für einen Drehmoment-Sensor aufweist, der die menschliche Antriebskraft erfasst.

14. Fahrrad (1) mit elektrischer Unterstützung nach einem der Ansprüche 1 bis 13, das des Weiteren eine Freilaufkupplung (33) umfasst, mit der eine Zusatz-Antriebskraft auf einem Übertragungsweg für eine menschliche Antriebskraft zwischen der Kurbelwelle (7a) und dem langsamlaufenden Untersetzungs-Rad (36) unterbrochen wird, wobei die Freilaufkupplung Übertragung einer Zusatz-Antriebskraft von dem Motor (21) zu der Kurbelwelle (7a) verhindert.

15. Fahrrad (1) mit elektrischer Unterstützung nach Anspruch 14, das des Weiteren einen eingreifenden zylindrischen Teil umfasst, der an dem Außenumfang der Kurbelwelle (7a) so angeordnet ist, dass er mit dem Element (7b) zur Übertragung menschlicher Kraft in Eingriff ist,
wobei die Freilaufkupplung (30) zum Unterbrechen einer Zusatz-Antriebskraft zwischen dem eingreifenden zylindrischen Teil (23) und dem langsamlaufenden Untersetzungs-Rad (36) angeordnet ist.

16. Fahrrad (1) mit elektrischer Unterstützung nach Anspruch 15, das des Weiteren einen Drehungs-Detektor (10) umfasst, der eine Drehung des eingreifenden zylindrischen Teils oder des Elementes zur Übertragung menschlicher Kraft erfasst.

17. Fahrrad (1) mit elektrischer Unterstützung nach einem der Ansprüche 1 bis 16, wobei das endlose Antriebskraft-Übertragungselement (15) ein Zahnriemen ist.

## Revendications

1. Vélo à assistance électrique (1) comprenant une unité d'entraînement de moteur (20) avec un moteur (21), le vélo à assistance électrique (1) étant capable de se déplacer avec une combinaison d'une force motrice humaine générée par une force pédale provenant d'une pédale (8) et d'une force motrice auxiliaire générée par le moteur (21),
dans lequel le vélo à assistance électrique (1) comprend un vilebrequin (7a) qui reçoit une force motrice humaine transmise par la pédale (8) et tourne autour d'un axe différent du moteur (21),
le vilebrequin (7a) comporte un élément de transmission de puissance humaine (7b) sur une périphérie extérieure du vilebrequin (7a), l'élément de transmission de puissance humaine (7b) recevant la force motrice humaine transmise,
le vilebrequin (7a) présente un élément de transmission de force résultante (29) sur la périphérie extérieure du vilebrequin (7a), l'élément de transmission de force résultante (29) recevant une force résultante d'une force motrice humaine et une force motrice auxiliaire provenant du moteur (21),
le vélo à assistance électrique (1) comprend un mécanisme de réduction de vitesse (25), la force résultante transmise à l'élément de transmission de force résultante (29) par le mécanisme de réduction de vitesse (25) est transmise à une roue arrière (4) à travers une roue de sortie de force motrice coaxiale avec le vilebrequin (7a) et un élément de transmission de force motrice sans fin (15) en boucle sur la roue de sortie de force motrice;
**caractérisé en ce que**
le mécanisme de réduction de vitesse (25) possède des paires de réducteurs (27, 40; 38, 36; 39, 41) et un embrayage de sélection;
le mécanisme de réduction de vitesse (25) combinant la force motrice humaine et la force motrice auxiliaire et changeant les réducteurs pour obtenir une force résultante de la force motrice humaine et de la force motrice auxiliaire,
l'unité d'entraînement de moteur (20) contient l'élément de transmission de puissance humaine (7b), l'élément de transmission de force résultante (29) et le mécanisme de réduction de vitesse (25): un arbre intermédiaire (44) disposé parallèlement au vilebrequin (7a);
une pluralité de réducteurs d'arbre intermédiaire (37, 38, 39) prévus sur l'arbre intermédiaire (44);
un réducteur à faible vitesse (36) qui peut tourner sur la périphérie extérieure du vilebrequin (7a) et qui reçoit une force motrice humaine transmise et une force motrice auxiliaire transmise;
un réducteur à grande vitesse (41) qui peut tourner sur la périphérie extérieure du vilebrequin (7a) et qui reçoit une force motrice humaine transmise et une force motrice auxiliaire transmise;
un embrayage unidirectionnel à faible vitesse (51) disposé sur un trajet de transmission de force motrice depuis le réducteur à basse vitesse (36) vers l'élément de transmission de force résultante (29);
un embrayage unidirectionnel à grande vitesse (52) disposé sur un trajet de transmission de force motrice depuis le réducteur à grande vitesse (41) vers l'élément de transmission de force résultante (29); et
l'embrayage de sélection (45) en prise de façon amovible avec l'embrayage unidirectionnel à grande vitesse (52), et
l'embrayage de sélection (45) est en prise avec l'embrayage unidirectionnel à grande vitesse (52) de manière à placer l'embrayage unidirectionnel à grande vitesse (52) dans un état libre, alors que l'embrayage de sélection (45) est débrayé de l'embrayage unidirectionnel à grande vitesse (52) de manière à activer l'embrayage unidirectionnel à grande vitesse (52).

2. Vélo à assistance électrique(1) selon la revendication 1, dans lequel l'embrayage de sélection (45) peut coulisser sur l'élément de transmission de force résultante (29).

3. Vélo à assistance électrique(1) selon l'une des revendications 1 et 2, dans lequel l'embrayage unidirectionnel à faible vitesse (51) et l'embrayage unidirectionnel à grande vitesse (52) se chevauchent perpendiculairement à l'axe du vilebrequin (7).

4. Vélo à assistance électrique (1) selon l'une quelconque des revendications 1 à 3, comprenant en outre:
une unité de commande (24); et
un détecteur de position (57, 58) qui détecte une position de l'embrayage de sélection (45) ou d'un élément d'enclenchement qui se verrouille avec l'embrayage de sélection (45).

5. Vélo à assistance électrique (1) selon la revendication 4, dans lequel le détecteur de position (57, 58) est capable de détecter si l'embrayage de sélection (45) et le composant d'enclenchement sont situés dans une position vitesse lente, une position grande vitesse ou une position intermédiaire entre la position vitesse lente et la position grande vitesse.

6. Vélo à assistance électrique (1) selon l'une des revendications 4 et 5, dans laquelle lorsque le détecteur de position (57, 58) détecte un mouvement de l'embrayage de sélection (45) ou du composant d'enclenchement de la position grande de vitesse à la position vitesse lente, l'unité de commande (24) commande le moteur (21) de manière à réduire temporairement une force motrice auxiliaire.

7. Vélo à assistance électrique(1) selon l'une des revendications 1 et 2, comprenant en outre un mécanisme d'application de force qui applique une force conduisant l'embrayage de sélection (45) à incliner des cames de l'embrayage unidirectionnel grande vitesse (52) lorsque l'embrayage de sélection (45) est déplacé de la position grande vitesse à la position vitesse lente.

8. Vélo à assistance électrique (1) selon la revendication 7, dans lequel le mécanisme d'application de force comprend:
un dispositif de poussée qui sollicite l'embrayage de sélection de manière à incliner les cames de l'embrayage unidirectionnel à grande vitesse; et
un générateur de force d'impact qui applique une force d'impact pour déplacer l'embrayage de sélection dans une direction axiale du vilebrequin (7a) en utilisant une force de sollicitation du dispositif de sollicitation.

9. Vélo à assistance électrique(1) selon la revendication 8, dans lequel le générateur de force d'impact est une protubérance prévue sur une surface de contact de l'embrayage de sélection avec un bras d'entraînement d'embrayage qui entraîne l'embrayage de sélection.

10. Vélo à assistance électrique (1) selon l'une quelconque des revendications 7 à 9, dans laquelle le mécanisme d'application de force a une surface inclinée qui génère une force de composant pour déplacer l'embrayage de sélection (45) dans une direction qui met en prise l'embrayage de sélection (45) avec l'embrayage unidirectionnel à grande vitesse (52) lorsque l'embrayage de sélection (45) est déplacé de la position grande vitesse à la position vitesse lente.

11. Vélo à assistance électrique (1) selon la revendication 10, dans laquelle l'embrayage de sélection (45) et l'élément de transmission de force résultante (29) sont montés l'un par rapport à l'autre autour de l'axe du vilebrequin (7a) dans un angle prédéterminé, l'embrayage de sélection (45) ou bien l'élément de transmission de force résultante (29) a la surface inclinée, et l'autre de l'embrayage de sélection (45) et de l'élément de transmission de force résultante (29) a des protubérances qui viennent en contact avec la surface inclinée.

12. Vélo à assistance électrique (1) selon l'une quelconque des revendications 7 à 9, dans lequel l'embrayage de sélection (45) et l'élément de transmission de force résultante (29) sont ajustés l'un à l'autre de manière à tourner l'un par rapport à l'autre autour de l'axe du vilebrequin (7a), et le mécanisme d'application de force comprend:
un évidement de stockage qui est formé sur une périphérie interne de l'embrayage de sélection (45) et stocke la came surélevée de l'embrayage unidirectionnel à grande vitesse (52);
une surface intérieure inclinée qui continue à partir de l'évidement de stockage et dont le diamètre diminue dans un mouvement circonférentiel sur la périphérie interne de l'embrayage de sélection (45) de manière à incliner la came; et
une surface de maintien d'inclinaison qui est formée sur la périphérie interne de l'embrayage de sélection (45) et maintient une inclinaison de la came.

13. Vélo à assistance électrique (1) selon l'une quelconque des revendications 1 à 12, dans laquelle l'élément de transmission de puissance humaine (7b) comporte une partie de génération de magnétostriction pour un capteur de couple qui détecte la force motrice humaine.

14. Vélo à assistance électrique (1) selon l'une quelconque des revendications 1 à 13, comprenant en outre un embrayage unidirectionnel (30) pour interrompre une force motrice auxiliaire sur un chemin de transmission pour une force motrice humaine entre le vilebrequin (7a) et le réducteur à vitesse lente (36), l'embrayage unidirectionnel empêchant la transmission d'une force motrice auxiliaire du moteur (21) au vilebrequin (7a).

15. Vélo à assistance électrique selon la revendication 14, comprenant en outre une partie cylindrique d'enclenchement prévue sur la périphérie extérieure du vilebrequin (7a) de manière à être en prise avec l'élément de transmission d'énergie humaine (7b),
dans lequel l'embrayage unidirectionnel (30) pour interrompre une force motrice auxiliaire est disposé entre la partie cylindrique d'enclenchement et le réducteur à vitesse lente (36).

16. Vélo à assistance électrique (1) selon la revendication 15, comprenant en outre un détecteur de rotation (10) qui détecte une rotation de la partie cylindrique d'enclenchement ou bien de l'élément de transmission d'énergie humaine.

17. Vélo à assistance électrique (1) selon l'une quelconque des revendications 1 à 16, dans laquelle l'élément de transmission de force motrice sans fin (15) est une courroie crantée.
